Europäisches Patentamt

European Patent Office

Office européen des brevets

(19)

(11) Veröffentlichungsnummer: **0 133 882**
**B1**

(12)　EUROPÄISCHE PATENTSCHRIFT

(45) Veröffentlichungstag der Patentschrift: **04.04.90**

(51) Int. Cl.⁵: **B 01 D 67/00**, D 01 D 5/24

(21) Anmeldenummer: **84106771.3**

(22) Anmeldetag: **14.06.84**

(54) Poren aufweisende Formkörper.

(30) Priorität: **30.07.83 DE 3327638**
**16.08.83 DE 3329578**

(43) Veröffentlichungstag der Anmeldung:
**13.03.85 Patentblatt 85/11**

(45) Bekanntmachung des Hinweises auf die
Patenterteilung:
**04.04.90 Patentblatt 90/14**

(84) Benannte Vertragsstaaten:
**DE FR GB IT NL SE**

(56) Entgegenhaltungen:
**EP-A-0 044 405**
**DE-A-2 833 493**

(73) Patentinhaber: **Akzo Patente GmbH**
**Postfach 10 01 49 Kasinostrasse 19-23**
**D-5600 Wuppertal-1 (DE)**

(72) Erfinder: **Josefiak, Christoph, Dr. Dipl.-Chem.**
**Dr. Jordanstrasse 17b**
**D-8765 Erlenbach (DE)**
Erfinder: **Wechs, Friedbert**
**Bayernstrasse 26**
**D-8761 Wörth (DE)**

**Beschreibung**

Die Erfindung betrifft ein Verfahren zur Herstellung von Poren aufweisenden Formkörpern wie Fäden, Membranen in Form von Hohlfasern, Flachfolien, Schlauchfolien und dergleichen, durch Extrudieren eines homogenen, einphasigen, flüssigen Gemisches aus einem oder mehreren Polymeren und einem oder mehreren, bei der Temperatur der Herstellung des Gemisches flüssigen Mischungspartnern, wobei das Gemisch oberhalb Raumtemperatur im flüssigen Zustand einen Bereich völliger Mischbarkeit und eine Mischungslücke aufweist und oberhalb Raumtemperatur einen Erstarrungsbereich besitzt, in eine Abkühlflüssigkeit enthaltende Abkühlvorrichtung, wobei man die Polymer/Mischungspartner-Mischung bei einer Temperatur oberhalb der Mischungslücke mit einer mittleren linearen Geschwindigkeit $v_1$ durch eine Düse von oben nach unten in eine Abkühlflüssigkeit fördert, welche bei Abkühltemperatur das Polymer nicht oder nur unwesentlich löst und die eine Temperatur unterhalb des Erstarrungspunktes besitzt, und man die extrudierte Mischung von der Eintrittsstelle in die Abkühlflüssigkeit mindestens bis zur Stelle der beginnenden Erstarrung durch eine kanalförmige, von einer Wand umgebene Zone führt, den Formkörper nach beginnender Erstarrung des Polymers umlenkt und von unten nach oben durch eine zweite Zone leitet, den Formkörper aus der Abkühlflüssigkeit abzieht und auswäscht, bis alle Bestandteile außer dem bzw. den Polymeren vollständig oder nahezu vollständig entfernt sind und man den Formkörper anschließend trocknet. Sie betrifft ferner eine Vorrichtung zur Durchführung des Herstellungsverfahrens.

Ein Verfahren mit den oben beschriebenen Merkmalen ist aus der DE—A—28 33 493 bekannt.

Membranen, welche für Trennprozesse auf den verschiedensten Anwendungsgebieten wie zum Beispiel in der Medizin, der Pharmazie, der Lebensmittelchemie, aber auch auf technischen Gebieten eingesetzt werden können, sowie Verfahren zu deren Herstellung sind bereits seit langem bekannt. Die Membranen werden aus Polymeren wie regenerierter Cellulose, Cellulose-derivaten, aber auch aus synthetischen Polymeren wie Polypropylen, Polyestern, Polyamiden, Polyurethanen, Polycarbonaten, halogenierten Polyolefinen und dergleichen hergestellt. Je nach den Herstellungsbedingungen, dem eingesetzten Polymer und dessen Eigenschaften sind die Membranen mehr für Osmose und umgekehrte Osmose, für Dialyse, für Ultrafiltration, für Mikrofiltration oder für sonstige Zwecke geeignet. Entscheidend für die Eignung einer Membran für das jeweilige Anwendungsgebiet ist ihre Durchlässigkeit oder Permeabilität, ihre Rückhaltegrenze sowie die Selektivität. Daneben spielen selbstverständlich auch Eigenschaften wie mechanische Festigkeit, Beständigkeit gegenüber dem Behandlungsmedium, hydrophile oder hydrophone Eigenschaften gegenüber dem Behandlungsmedium und so weiter eine Rolle. Wichtig ist ferner, daß man die Membran eine möglichst lange Zeit während einer Trennoperation im Einsatz belassen kann, ohne daß die Membran verstopft oder daß sie während des Einsatzes ihre Eigenschaften so ändert, daß auch die Permeabilität und die Selektivität nicht mehr gleich bleiben.

Von ganz großer Bedeutung ist bei der Herstellung von Membranen, daß man in der Lage ist, kontrolliert bestimmte Eigenschaften wie Durchlässigkeit und Selektivität bei der Produktion von Membranen einzustellen, und daß es gelingt, reproduzierbar diese konstanten Eigenschaften zu erreichen. Nichts ist nämlich schlimmer, insbesondere auf medizinischem Gebiet, als wenn die Eigenschaften der Membranen von Charge zu Charge schwanken.

Für viele Anwendungsgebiete, insbesondere bei der Behandlung von Wasser enthaltenden Gemischen sowohl im medizinischen, pharmazeutischen als auch im technischen Bereich, sind Membranen von Vorteil, die eine gewisse Hydrophilie besitzen, wie z.B. Membranen auf Basis von Polyamiden. In anderen Fällen wird darauf Wert gelegt, daß Membranen chemisch sehr resistent sind. So stellt z.B. Polyvinylidenfluorid (PVDF) ein Polymeres dar, das auch gegenüber stark sauren und stark alkalischen wäßrigen Lösungen und gegen oxidierende Medien beständig ist. Membranen aus PVDF sollten sich also auch vor allem für Prozesse einsetzen lassen, für die andere Polymere auf Grund ihrer chemischen Natur weniger geeignet oder ungeeignet sind. Die oben erwähnten Eigenschaften von Membranen wie Permeabilität und Selektivität hängen nicht zuletzt von der Porenstruktur der Membranen ab.

Membranen, welche Poren aufweisen, werden im allgemeinen durch Verarbeiten einer Polymerlösung hergestellt, indem man beispielsweise die Polymerlösung auf eine glatte Unterlage zu einem Film ausstreicht und das Lösungsmittel verdunsten läßt oder indem man durch Behandlung mit einer Flüssigkeit, welche ein Nichtlöser für das Polymer, aber ein Löser für das Lösungsmittel ist, die Membranstruktur durch Koagulation herstellt. Um möglichst gleichmäßige Porenstrukturen zu erhalten, sind Koagulationsverfahren jedoch nicht sonderlich geeignet. Auch bei der Methode der Herstellung der Membranen, bei der das Lösungsmittel verdampft wird, kommt es zur Ausbildung einer gewissen Asymmetrie innerhalb der Membran. Auch bildet sich häufig eine Haut, welche die Durchlässigkeit der Membran beeinträchtigt.

In neuerer Zeit sind auch Verfahren zur Herstellung von Membranen entwickelt worden, bei denen weder eine Koagulation durch Naßfällen stattfindet noch das Lösungsmittel aus der Lösung durch Erwärmen verdampft wird. So wird in der DE—A 28 33 493 ein Verfahren zum Herstellen von porösen, als Membranen einsetzbaren Hohlfäden beschrieben, bei dem ein homogenes, einphasiges Gemisch aus einem schmelzbaren Polymer und einer gegenüber dem Polymer inerten Flüssigkeit, wobei das Polymer und die inerte Flüssigkeit ein binäres System bilden, das im flüssigen Aggregatzustand einen Bereich völliger Mischbarkeit und einen Bereich mit Mischungslücke aufweist, bei einer Temperatur oberhalb der Entmischungstemperatur in ein Bad extrudiert wird, das ganz oder zum größten Teil aus der inerten Flüssigkeit besteht, welche auch in dem extrudierten Gemisch vorhanden ist und das eine Temperatur unterhalb der Entmischungstemperatur besitzt. Durch Abkühlung wird die gebildete Hohlfadenstruktur verfestigt. Um freie, leere Poren zu erhalten, wird nach der Verfestigung die inerte Flüssigkeit, vorzugsweise durch Extraktion, entfernt. Mit diesem Verfahren ist es möglich, Membranen mit einer weitgehand isotropen Struktur im Innern zu erhalten, die darüber hinaus eine Oberfläche besitzen, die trotz eines hohen Öffnungsgrades sehr glatt ist. Obwohl man mit diesem Verfahren in hervorragender Weise gute Membranen herstellen kann, treten Schwierigkeiten auf, wenn man Gemische verarbeiten will, deren Viskosität entweder aufgrund sehr geringer Konzentrationen niedrig ist oder die Polymere enthalten, die aufgrund ihres niedrigen Molekulargewichts zu Gemischen mit niedriger Viskosität führen.

Es hat sich herausgestellt, daß auch bei diesen Verfahren noch gewisse Schwierigkeiten auftreten können, wenn poröse Formkörper aus Polymerzusammensetzungen hergestellt werden sollen, die während der Verarbeitung gegenüber mechanischer Beanspruchung empfindlich sind. Diese Anfälligkeit gegenüber mechanischer Beanspruchung ist in besonderem Maß bei niedrigviskosen Polymerischungen gegeben.

Auch nach den günstigen Verfahren, bei denen eine Mischung einer homogenen flüssigen Polymerzusammensetzung bei Abkühlung zuerst ein flüssiges Zweiphasengebiet durchläuft und dann noch oberhalb Raumtemperatur erstarrt, ist es schwierig, diese Mischungen zu Poren aufweisenden Formkörpern zu verarbeiten, wenn die Viskosität der zu verarbeitenden Mischung vor ihrer Extrusion durch eine Düse unterhalb eines bestimmten Bereichs, nämlich unterhalb etwa 15 Pa·s liegt. Andererseits ist es vielfach erwünscht, relativ niedrigviskose Mischung zu verarbeiten, um spezielle Ausgestaltungen des Porensystems zu erzielen.

Auch hat es sich gezeigt, daß bei der Herstellung der Membranen Unregelmäßigkeiten auftreten können, wenn man mit einem Bad arbeitet, das sich in einer üblichen Wanne befindet. Alle Bewegungen wie Wellenbewegungen, sowie Veränderungen des Bades bezüglich Konzentration, Temperatur und so weiter, beeinflussen die Membranbildung sofort und führen zu Membranen mit unterschiedlichen Eigenschaften. Auch ist es schwierig, ein solches Bad so umzuwälzen, daß konstante Temperatur und Zusammensetzung an der Eintrittsstelle der extrudierten Mischung gewährleistet sind.

Eine Reihe von Nachteilen ergeben sich auch beim Arbeiten mit einem Spinnrohr, wie es in der DE—A 28 33 493 beschrieben wird. So wirken starke Scherkräfte auf die sich bildende Membran ein; auch sind die Verfahrensparameter im Spinnrohr, unter denen man gut arbeiten kann, stark eingeschränkt. So erlaubt dieses Verfahren nur ein Arbeiten innerhalb eines relativ engen Viskositäts- und Temperaturbereichs des Abkühlmediums und beschränkt somit die Steuerung von Porengröße und Porenstruktur. Die oben erwähnten starken Scherkräfte wirken sich besonders nachteilig bei niedrigviskosen Polymer/Flüssigkeitsgemischen aus.

Die Herstellung von Poren aufweisenden Formkörpern in Form von Fäden ist ebenfalls kompliziert, und viele Nachteile, die bei Verfahren zur Herstellung von Membranen auftreten, finden sich auch bei Verfahren zur Herstellung von Poren aufweisenden Fäden wieder. Auch hier ist es schwierig, kontrolliert bestimmte Porenstrukturen zu erzielen. Auch für Fäden gilt, daß man insbesondere für Anwendungsgebiete wie kontrollierte Abgabe von Wirkstoffen, spezifische Adsorption und so weiter, Fäden mit genau einstellbaren Porenstrukturen benötigt.

Es besteht deshalb noch ein Bedürfnis nach einem verbesserten Verfahren zur Herstellung von Poren aufweisenden Formkörpern, insbesondere von Membranen mit guten Permeabilitäten und Selektivitäten.

Der vorliegenden Erfindung lag daher die Aufgabe zugrunde, ein Verfahren zur Herstellung Poren aufweisender Formkörper, insbesondere Membranen, zur Verfügung zu stellen, bei dem die verschiedenen Verfahrensparameter in weiten Grenzen variiert werden können, das wenig störanfällig ist und das insbesondere die Verarbeitung von niedrigviskosen Gemischen zuläßt und mit dem man reproduzierbar konstante Eigenschaften wie zum Beispiel die Porosität einstellen kann und mit dem man auf vorteilhafte Weise zu Formkörpern aus den unterschiedlichsten Polymeren gelangen kann.

Diese Aufgabe wird gelöst durch ein Verfahren gemäß Oberbegriff von Anspruch 1, das dadurch kegennzeichnet ist, daß man in der kanalförmigen Zone die mittlere lineare Geschwindigkeit $v_2$ der Abkühlflüssigkeit, gemessen in Bewegungsrichtung der Polymer-Mischungspartner-Mischung, mindestens 20% kleiner hält als $v_1$, daß man das Niveau der Abkühlungflüssigkeit sowohl an der Eintrittsstelle der Mischung in die Abkühlungflüssigkeit als auch an der Austrittsstelle des Formkörpers aus der Abkühlungflüssigkeit konstant hält und man die Abkühlungflüssigkeit an diesen beiden Stellen auf dem gleichen Niveau hält.

Die zur Produktion der Poren aufweisenden Formkörper eingesetzte Polymer/Mischungspartner-Mischung, die als einphasiges, homogenes, flüssiges Gemisch extrudiert wird, wird aus einem oder mehreren Polymeren und einem oder mehreren Mischungspartnern hergestellt. Mindestens einer der Mischungspartner muß bei der Temperatur der Herstellung der Mischung ein Lösungsmittel für das Polymer sein, so daß eine einphasige, flüssige Mischung erhalten wird. Die Mischungskomponenten, das heißt das oder die Polymere und die Mischungspartner müssen nach Art und Menge so gewählt werden, daß die Mischung im flüssigen Zustand einen Bereich völliger Mischbarkeit aufweist und eine Mischungslücke besitzt, so daß die Mischung beim Abkühlen zuerst infolge Entmischung in flüssige Phasen einen Temperaturbereich durchläuft, in dem zwei flüssige Phasen nebeneinander auftreten und erst anschließend unter Bildung eines festen Formkörpers erstarrt. Die eine der beiden nach Entmischung gebildeten Phasen stellt eine an Polymer verarmte, flüssige Phase aus Mischungspartnern dar, die andere eine an Mischungspartnern verarmte, mit Polymer angereicherte flüssige Phase. Letztere führt bei weiterer Abkühlung durch Erstarrung zum porösen Formkörper. Sowohl die Temperatur, bei der die Entmischung in zwei flüssige Phasen auftritt als auch die Erstarrungstemperatur müssen oberhalb Raumtemperatur liegen, um zu gewährleisten, daß ohne zusätzliche Arbeitsschritte wie Kühlung bis unterhalb der Raumtemperatur oder Extraktion des Lösungsmittels der Formkörper erhalten wird. Vorzugsweise liegt die Erstarrungstemperatur des oder der Polymeren in dem eingesetzten Polymer/Mischungspartner-Gemisch bei einer Temperatur oberhalb 50°C. Es ist möglich, neben dem Lösungsmittel noch zusätzlich andere Mischungskomponenten wie Nichtlöser, Pigmente, Verdickungsmittel und Tenside zu verwenden, sofern die oben genannten Bedingungen eingehalten werden. Speziell der Zusatz eines Nichtlösers, also eines Mischungspartners, in welchem das bzw. die Polymere nicht löslich ist bzw. sind, bringt in der Regel Vorteile. Der Zusatz eines Nichtlösers bewirkt nämlich im allgemeinen keine Veränderung der Erstarrungstemperatur bei den vorstehend beschriebenen Systemen, erhöht aber je nach Art und Menge des Nichtlösers die Entmischungstemperatur. Dadurch wird der Temperaturbereich vergrößert, in dem zwei flüssige Phasen nebeneinander vorliegen und damit der Spielraum für eine gezielte Variation des Porensystems. Daneben führt die gezielte Zugabe von Nichtlöser in ausgewählter Art und Menge dazu, daß mehr Spielraum gewonnen wird, was Art und Menge des Lösungsmittels betrifft. Die Auswahl mancher Lösungsmittel entweder nach Art oder Menge ist ohne Zusatz von Nichtlöser nämlich dadurch ausgeschlossen, daß Mischungen, die nur diese Lösungsmittel enthalten, nicht zur Bildung flüssiger Zwei-Phasen-Systeme befähigt sind.

Der bzw. die Mischungspartner müssen bei der Verfahrenstemperatur gegenüber dem bzw. den Polymeren inert sein, d.h. das bzw. die Polymere dürfen durch Mischungspartner nicht chemisch verändert werden.

Besonders bei der Verarbeitung von Polyamiden hat sich der Einsatz von Verdickungsmitteln bewährt. Verdickungsmittel können im allgemeinen in Konzentrationen von bis zu etwa 1 Gew.-%, vorzugsweise von 0,05 bis 0,3 Gew.-%, bezogen auf den mitverwendeten Mischungspartner, das heißt die Lösungsmittel bzw. Nichtlösungsmittel, eingesetzt werden.

Es versteht sich von selbst, daß Zusätze wie Kieselsäure oder Verstärkungsfasern sich in dem Gemisch nicht lösen und das Merkmal homogen und einphasig sich nur auf den Hauptbestandteil der Mischung, nämlich Polymer und Mischungspartner bezieht.

Besonders geeignet ist das erfindungsgemäße Verfahren zum Herstellen von Poren aufweisenden Formkörpern aus Polymeren mit hydrophilen Eigenschaften. Solche Eigenschaften sind vor allem bei der Behandlung von Wasser enthaltenden Gemischen erwünscht. Als Einsatzgebiete, auf denen sich die erfindungsgemäßen Formkörper besonders günstig einsetzen lassen, seien unter anderem der medizinische Bereich erwähnt, z.B. die Sterilfiltration von Wasser.

Zahllose Einsatzmöglichkeiten bieten sich in der Technik an, z.B. auf dem Gebiet der Lebensmittelchemie wie bei der Filtration von Getränken usw.

Als Polymere für solche eine Hydrophilie verlangende Einsatzzwecke eignen sich Polyurethane, insbesondere aber Polyamide und Copolyamide; bevorzugt werden Polyamid 6 und Copolyamide auf der Basis von ξ-Caprolactam und Hexamethylendiamin/Adipinsäure verwendet, z.B. ein Copolyamid auf der Basis von 80% ξ-Caprolactam und 20% Hexamethylendiamin/Adipinsäure-Salz. Auch Gemische von Homopolyamiden und Gemische von Homopolyamiden und Copolyamiden sowie Gemische von Copolyamiden sind sehr geeignet. Durch Verschneiden dieser Homopolymere bzw. Copolymere lassen sich interessante Eigenschaften einstellen.

Ein anderes Polymeres, aus dem mittels der vorliegenden Erfindung vorteilhaft Poren aufweisende Formkörper hergestellt werden können, ist Polyvinylidenfluorid (PVDF). Das für die Herstellung der Mischung verwendete PVDF kann hierbei von handelsüblicher Qualität sein. Das Molekulargewicht muß jedoch mindestens so hoch sein, daß das Polymere zur Fadenbildung befähigt ist. Geeignet ist z.B. Solef 1012 (Hersteller: Fa. Solvay, Brüssel).

Als Lösungsmittel für die Herstellung der Mischung sind prinzipiell alle Substanzen geeignet, die eine Mischung ergeben, welche die in Anspruch 1 gestellten Anforderungen erfüllt. Besonders bevorzugt sind jedoch bei Raumtemperatur flüssige Substanzen geringer Toxizität, die einen Siedepunkt deutlich oberhalb der Entmischungstemperatur der mit ihnen hergestellten Polymer-Mischung besitzen.

Als Lösemittel im Sinne der Erfindung für Polyamid sind besonders geeignet Äthylenglykol, Diäthylenglykol, Triäthylenglykol, Glycerin, ξ-Caprolactam, Glycerin-monoacetat, Gemische aus Äthylenglykol und Glycerin und andere mehr.

Als Lösungsmittel im Fall von PVDF als Polymer haben sich als besonders vorteilhaft Glycerintriacetat, Glycerindiacetat, 2-(2-Butoxy-äthoxy-)-äthylacetat oder Gemische hiervon erwiesen. Das Glycerindiacetat kann das 1,2-oder das 1.3-Isomere oder ein Gemisch aus beiden sein.

Als Nichtlöser bzw. als Quellmittel fr die erwähnten Polyamide kann Glycerin dienen, nämlich dann, wenn bereits ein anderes, bei niedriger Temperatur besser wirkendes Lösemittel vorhanden ist, so daß Glycerin als Nichtlöser wirkt. Auch Polyäthylenglykol und Triacetin seien in diesem Zusammenhang genannt.

Für den Fall, daß mit Zusatz eines Nichtlösers gearbeitet wird, kann bei Verwendung von PVDF als Polymer als Nichtlöser eine beliebige Substanz oder ein beliebiges Substanzgemisch gewählt werden, sofern die in Anspruch 1 gestellten Anforderungen erfüllt sind. Als besonders vorteilhaft, speziell im

Zusammenhang mit den genannten, für PVDF bevorzugten Lösungsmitteln, haben sich Di-n-octyladipat und Rizinusöl oder Gemische hiervon herausgestellt.

Besonders vorteilhaft ist, zum Beispiel dann, wenn Polyamid 6 als Polymer verwendet wird und Äthylenglykol und Glycerin als Mischungspartner eingesetzt werden, das Mitverwenden von Verdickungsmitteln, vorzugsweise in Konzentrationen von 0,05 bis 0,3 Gew.-%, bezogen auf die Mischungspartner (Lösungsmittel und ggf. Nichtlöser). Geeignete Verduckungsmittel sind zum Beispiel Carbopol 934 der Firma Goodrich (hochmolekulares Carboxyphenylpolymer), Keltrol F (Firma Kelco in New Jersey USA) Sedipur TF7 (BASF).

Die Herstellung der einphasigen Gemische kann grundsätzlich durch Mischen und Erwärmen der Komponenten auf die Temperatur erfolgen, bei der sich eine homogene Mischung bildet. Sind das Polymer und die Mischungspartner auch bei sehr hohen Temperaturen gegenseitig inert, so kann man bei verhältnismäßig hohen Temperaturen, z.B. über der Schmelztemperatur des Polymeren lösen; das gilt z.B. für die Mischung Polyamid 6 und ξ-Caprolactam/Triacetin. Wenn Polymere und Mischungspartner bei höheren Temperaturen nicht gegenseitig inert sind, wie das z.B. bei Polyamid 6 und Äthylenglykol/Glycerin der Fall ist, wo bei höheren Temperaturen ein Polymerabbau stattfindet, das gleiche gilt auch für Polyamid 6 — Äthylenglykol/Polyäthylenglykol-Mischungen, sollte die Temperatur für die Herstellung der Mischung so niedrig wie möglich sein und auch die Verweilzeit beim Mischen möglichst kurz. Dies läßt sich z.B. dadurch erreichen, daß man das Polyamid bei Schmelztemperaturen für sich aufschmilzt und die Mischungspartner auf eine niedrigere Temperatur erwärmt und dann Polyamid und Mischungspartner miteinander vermischt. Die dabei sich einstellende Temperatur des Gemisches liegt deutlich unter dem Schmelzpunkt des Polymeren, muß aber über der Temperatur der Mischungslücke liegen.

Möglich ist auch, beispielsweise das pulverisierte Polyamid mit den Mischungspartnern bei Zimmertemperatur anzuteigen und auf eine Temperatur oberhalb der Entmischungstemperatur zu erwärmen.

Sowohl das Vermischen bei dem ersten Verfahren als auch das Erhitzen über die Mischungslücke beim zweiten Verfahren geschieht vorzugsweise kontinuierlich und mit kurzen Verweilzeiten, das heißt, daß die Mischung auch nach dem Vermischen ohne Verzögern weiter verarbeitet wird, das heißt zum Formkörper verformt wird.

Weitere Polymere werden in der DE—A 27 37 745 genannt, auf deren Offenbarung sich hier ausdrücklich bezogen wird. In dieser Offenlegungsschrift werden auch geeignete Flüssigkeiten erwähnt, die in Kombination mit dem entsprechenden Polymeren zu einphasigen flüssigen Gemischen verarbeitet werden können.

Günstige Polymer/Mischungspartner-Mischungen mit mehreren Mischungspartnern werden in der deutschen Patentanmeldung Aktenzeichen 32 05 289 vom 15.2. 1982 beschrieben. Auf die Offenbarung in dieser Anmeldung wird sich ausdrücklich bezogen. Auch geeignete Abkühlflüssigkeiten werden dort genannt.

Die homogene, flüssige einphasige Mischung aus einem oder mehreren Polymeren und dem oder den Mischungspartnern wird zur Weiterverarbeitung nach an sich bekannten Verfahren durch eine Düse gefördert und tritt dann in eine Abkühlvorrichtung ein, die eine Abkühlflüssigkeit enthält. Die Düse ist je nach der gewünschten Form des Formkörpers zum Beispiel als Hohlfadendüse oder als Schlitzdüse oder auch Düse zur Herstellung von Schläuchen ausgebildet.

Um die mechanische Beanspruchung der Mischung vor dem Zeitpunkt der beginnenden Erstarrung gering zu halten, kann es besonders im Fall der Herstellung von Hohlfäden von Vorteil sein, das Innenvolumen durch Zudosierung nicht, wie üblich eines Gases, sondern einer Innenfüllflüssigkeit zu bilden. Die Zudosierung der Innenfüllflüssigkeit kann in der Düse erfolgen oder an der Stelle, an der die Mischung aus der Düse austritt. Als Innenfüllflüssigkeit muß eine Flüssigkeit gewählt werden, welche das Polymer bzw. die Polymeren bei der Temperatur der Förderung durch die Düse nicht löst. Speziell dann, wenn als Polymeres PVDF gewählt wird, ist die Verwendung von Glycerin als Innenfüllflüssigkeit vorteilhaft oder einer Flüssigkeit (z.B. Nichtlöser), die bei der Herstellung der Polymer-Mischungspartner-Mischung verwendet wurde. Der Vorteil des Arbeitens mit einer Innenfüllflüssigkeit anstelle der vielfach verwendeten Gase besteht darin, daß eine Flüssigkeit bei der nachfolgenden Abkühlung wegen ihres geringeren Wärmeausdehnungskoeffizienten zu geringerer Volumenarbeit und somit zu erhöhter Formstabilität des Polymerformkörpers während seiner Bildung führt. Daneben bietet die Verwendung einer Flüssigkeit anstelle eines Gases den Vorteil, daß das spezifische Gewicht der die Düse verlassenden Mischung in breiteren Bereichen gezielt eingestellt werden kann. Dadurch wird es möglich, die Geschwindigkeit der Mischung von der Düse bis zum Eintritt in die Abkühlflüssigkeit und auch bis zur Stelle der beginnenden Erstarrung gezielt zu variieren. Für den Fall, daß das Innenvolumen durch ein Gas erzeugt ist, wird Stickstoff bevorzugt.

Das Verfahren ist sehr geeignet zum Extrudieren von Polymer/Mischungspartner-Mischungen mit einer Viskosität von 2 bis 25 Pa·s. Es können jedoch auch Mischungen höherer Viskositäten verarbeitet werden. Bei den angegebenen Werten handelt es sich hierbei um die Viskositäten, welche die Mischungen bei derjenigen Temperatur aufweisen, bei der sie durch die Düse gefördert werden. Für den Fall, daß Polyvinylidenfluorid als Polymeres gewählt wird, beträgt die Viskosität der Mischung bevorzugt 5 bis 35 Pa·s.

Vorteilhaft werden Polymer-Mischungspartner-Mischungen mit 10 bis 90 Gew.-% Polymer verwendet, wobei der jeweils optimale Gehalt an Polymer von dessen Natur und der Naur der Mischungspartner abhängt. So ist es in bestimmten Fällen vorteilhaft, Mischungen zu verarbeiten, in denen der Polymergehalt nur 10—25 Gew.-% beträgt.

Das erfindungsgemäße Verfahren erlaubt es, wie oben erwähnt, auch niedrigviskose Mischungen zu verarbeiten. Diese Möglichkeit ist speziell für die Herstellung von Poren enthaltenden Formkörpern aus Polyamiden oder aus Polyvinylidenfluorid (PVDF) von Bedeutung, da einphasige, flüssige Mischungen, die diese Polymere enthalten, häufig niedrigere Viskositäten bei der Temperatur der Förderung durch die Düse aufweisen, als lösungen anderer Polymerer wie zum Beispiel hochpolymeren Polypropylens. Der durch das erfindungsgemäße Verfahren gegebene, gegenüber bekannten Verfahren größere Spielraum bezüglich der Viskosität, führt zu größerem Spielraum in der Zusammensetzung der Mischungen, was Polymerkonzentration, Art und Menge des Lösungsmittels und gegebenenfalls anderer Mischungskomponenten betrifft.

Dieser erhöhte Spielraum wiederum führt zu mehr Möglichkeiten in der Ausgestaltung des Porensystems. Auch ist es möglich, Polymere mit niedrigerem Molekulargewicht zur Herstellung von Membranen einzusetzen, als das bisher der Fall war. Dadurch ist es möglich, insbesondere auch die mechanischen Eigenschaften der Membranen gezielt zu beeinflussen.

Auch lassen sich mit dem erfindungsgemäßen Verfahren sehr niedrig konzentrierte Polypropylen-Mischungen verarbeiten zum Beispiel solche mit 15 Gew.-% oder weniger Polypropylen, die bei der Verarbeitung mit anderen bekannten Verfahren Schwierigkeiten machen.

Die aus der Düse austretende Polymer/Mischungspartner-Mischung tritt in eine Abkühlvorrichtung ein, die mit einer Abkühlflüssigkeit gefüllt ist. Zwischen Düse und Eintrittsstelle der Mischung in die Abkühlflüssigkeit kann sich ein Luftspalt befinden. Dadurch wird die erforderliche Temperaturkonstanz an der Düse leichter erzielt, als wenn die Düse in Kontakt mit der kälteren Abkühlflüssigkeit steht. Die Verwendung eines Luftspalts bringt in der Regel Vorteile. Dieser Luftspalt kann z.B. 2 bis 20 mm betragen.

Besonders günstig kann es sein, den Luftspalt zu klimatisieren, das heißt durch Beheizen auf einer bestimmten Temperatur zu halten oder dem Luftspalt, der ja Gase, z.B. Luft enthalten kann, eine bestimmte Zusammensetzung zu geben, z.B. durch Einstellen einer bestimmten relativen Feuchtigkeit oder durch Einstellen einer bestimmten Konzentration an Lösungsmitteldämpfen.

Da es für als Verfahren wesentlich ist, die mechanische Beanspruchung der Mischung mindestens bis zum Zeitpunkt der beginnenden Erstarrung möglichst gering zu halten, ist die Düse senkrecht oder nahezu senkrecht über der Eintrittsstelle der Mischung in die Abkühlflüssigkeit angebracht, so daß die Mischung nach Austritt aus der Düse frei ohne zusätzliche, vom senkrechten Weg ableitenden Kräfte, in die Abkühlflüssigkeit eintritt. In der Abkühlvorrichtung finden Abkühlung der Mischung und Erstarrung unter Bildung des porösen Formkörpers statt. Die Vorrichtung ist zu diesem Zweck mit einer Abkühlflüssigkeit gefüllt.

In einer besonders vorteilhaften Ausführungsform des erfindungsgemäßen Verfahrens befindet sich die Abkühlflüssigkeit in einem U-förmig gebogenen Rohr. Es kann während des Prozesses Abkühlflüssigkeit kontinuierlich der Abkühlvorrichtung zudosiert werden, wobei die Richtung, mit der diese durch die Vorrichtung strömt, der Bewegungsrichtung der Polymer/Mischungspartner/Mischung bzw. des gebildeten Formkörpers gleichgerichtet oder entgegengesetzt sein kann. Für diesen Fall einer kontinuierlichen Zudosierung besitzt die zudosierte Flüssigkeit eine konstante Temperatur, die unterhalb der Erstarrungstemperatur der Mischung liegt. Die Eintrittsstelle für die Abkühlflüssigkeit in die Vorrichtung befindet sich im Fall gleichlaufender Bewegung nahe an der Eintrittsstelle der Mischung in die Abkühlflüssigkeit. An der Austrittsstelle des gebildeten Formkörpers befindet sich in diesem Fall eine Überlaufeinrichtung, an der die Abkühlflüssigkeit die Vorrichtung verläßt. Für den Fall entgegengesetzter Bewegungsrichtung sind Ein- und Austrittsstelle der Abkühlflüssigkeit entsprechend vertauscht. Besonders vorteilhaft ist es, wenn man die Abkühlflüssigkeit um die Eintrittsstelle der Mischung herum durch mehrere Öffnungen zudosiert. Diese Öffnungen sind zweckmäßig symmetrisch um die Eintrittsstelle der Mischung angeordnet. Sehr günstig ist es, wenn man die Abkühlflüssigkeit um die Eintrittsstelle der Mischung herum in Form eines zusammenhängenden Films dosiert.

Mann kann das Niveau der Abkühlflüssigkeit an der Eintrittsstelle der Mischung und auch an der Austrittsstelle des Formkörpers entweder nur an einer Stelle oder auch an beiden Stellen durch ein Überlaufgefäß kontrollieren.

Es kann jedoch auch unter stationären bedingungen gearbeitet werden, d.h. es findet keine kontinuierliche Zudosierung von Abkühlflüssigkeit statt, sondern es werden nur die Verluste ausgeglichen, die dadurch entstehen, daß der gebildete Formkörper Abkühlflüssigkeit mitnimmt. Auch hierbei muß natürlich die Abkühlflüssigkeit in der Vorrichtung eine Temperatur unterhalb der Erstarrungstemperatur der Mischung aufweisen. In diesem Fall ist es zur Aufrechterhaltung konstanter Temperaturbedingungen in der Vorrichtung zweckmäßig, eine externe Thermostatisierung der Vorrichtung vorzunehmen. Die notwendige Aufrechterhaltung konstanter Temperaturbedingungen erfolgt also je nach Verfahrensvariante entweder durch die strömende Abkühlflüssigkeit oder durch externe Thermostatisierung oder beides zusammen oder durch sich ein während des Prozesses einstellendes Temperaturgleichgewicht. Im Falle großer Abmessungen der Abkühlvorrichtung empfiehlt sich eine externe Thermostatisierung. Unter konstanten Temperaturbedingungen wird in diesem Zusammenhang nicht verstanden, daß die Temperatur der Abkühlflüssigkeit an jeder Stelle der Vorrichtung den gleichen Wert besitzt — was wegen der Zufuhr der Polymermischung höherer Temperatur gara nicht möglich ist — sondern, daß an jeder Stelle der Vorrichtung die dort herrschende Temperatur sich während des Prozesses nicht oder nur unwesentlich ändert. Es kann also ein Temperaturgradient über die Länge der Vorrichtung vorliegen.

Für die Erfindung ist es von wesentlicher Bedeutung, daß die Polymermischung midestens bis zum

6

Zeitpunkt beginnender Erstarrung, d.h. bis zum Zeitpunkt beginnender Formstabiliserung, möglichst geringer mechanischer Beanspruchung unterworfen ist. Es ist deshalb nötig, dafür zu sorgen, daß die Mischung durch die Abkühlflüssigkeit keine Beschleunigung — dies gilt für den Fall gleicher Bewegungsrichtung von Mischung und Abkühlflüssigkeit — sowie keine zu starke Abbremsung — dies gilt für entgegengesetzte Bewegungsrichtung — erfährt. Daher muß die mittlere Geschwindigkeit $v_2$, gemessen in Bewegungsrichtung der Polymermischung, mit der die Abkühlflüssigkeit durch die Vorrichtung strömt, mindestens in der Zone zwischen Eintrittsstelle der Mischung in die Abkühlflüssigkeit und deren beginnender Erstarrung mindestens um 20% niedriger sein als die Geschwindigkeit $v_1$, mit der die Mischung aus der Düse austritt. Die Zone zwischen der Eintrittsstelle der Mischung in die Abkühlflüssigkeit und der Stelle beginnender Erstarrung der Mischung ist kanalförmig ausgebildet und von einer Wand umgeben.

Es ist wesentlich, daß die Abkühlflüssigkeit durch die kanalförmige Zone mit einer mittleren linearen Geschwindigkeit $v_2$ geführt wird, die mindestens um 20% kleiner ist als $v_1$. In bestimmten Fällen ist es darüber hinaus von Vorteil, wenn die Geschwindigkeit $v_2$ der Abkühlflüssigkeit um mindestens 25% kleiner ist als die Geschwindigkeit $v_1$, mit der die Polymer-Mischungspartner-Mischung durch die Düse gefördert wird. Bei der Herstellung poröser Formkörper aus Polyvinylenfluorid (PVDF) ist dies sogar erforderlich.

Man kann die mittlere lineare Geschwindigkeit $v_2$ der Abkühlflüssigkeit in der kanalförmigen Zone auch gleich O halten. In einem solchen Fall empfiehlt es sich, nur die Abkühlflüssigkeitsmenge durch Zudosieren zu ergänzen, die durch den Formkörper mitgeschleppt wird, wenn er die Abkühlflüssigkeit verläßt. Mann kann in einem solchen Fall sowohl an der Eintrittsstelle als auch an der Austrittsstelle vorsichtig, meistens in kleinen Mengen, Abkühlflüssigkeit zudosieren.

Es ist in diesem Falle besonders zweckmäßig, wenn man die Temperaturen in der Abkühlvorrichtung durch externe Thermostatisierung konstant hält.

In einer Ausführungsform des erfindungsgemäßen Verfahrens wird die Abkühlflüssigkeit entgegengesetzt zur Bewegungsrichtung der Polymer-Mischungspartner-Mischung durch die kanalförmige Zone geführt. Das heißt, man dosiert die Abkühlflüssigkeit an der Stelle zu, wo der Formkörper die Flüssigkeit verläßt. Es ist notwendig, den Flüssigkeitsspiegel der Abkühlflüssigkeit an der Austrittsstelle für den gebildeten Formkörper auf dem gleichen Niveau zu halten, wie an der Eintrittsstelle der Polymer/ Mischungspartner-Mischung in die Abkühlflüssigkeit.

Für den Fall, daß die Abkühlflüssigkeit entgegen der Bewegungsrichtung der Mischung durch die Vorrichtung strömt, ist die Geschwindigkeit der Abkühlflüssigkeit natürlich immer mindestens 25% niedriger als $v_1$, da die Geschwindigkeit der Abkühlflüssigkeit in diesem Fall negatives Vorzeichen hat. Somit ist für die Geschwindigkeit der Abkühlflüssigkeit ein breiter Spielraum gegeben. Dieser wird einerseits für gleiche Bewegungsrichtung durch die oben angegebene Forderung begrenzt, daß sie mindestens 20% kleiner sein muß, vorzugsweise mindestens 25% kleiner, als die Geschwindigkeit der Polymermischung. Für den Fall entgegengesetzter Bewegungsrichtung darf diese Geschwindigkeit natürlich nicht beliebig hohe Werte annehmen, sondern findet dort ihre Grenze, wo eine zu hohe Relativgeschwindigkeit zwischen Polymerischung und Abkühlflüssigkeit erreicht wird. Dieser Grenzwert hängt von jeweiligen Verfahrensparametern ab und ist durch wenige Experimente leicht zu ermitteln. Die Geschwindigkeit für den Fall entgegengesetzter Bewegungsrichtung findet dort ihre Grenze, wo Verformung oder Reißen der noch nicht stabilisierten Polymermischung auftreten. Eine Faustregel für die Grenze der Geschwindigkeit der Abkühlflüssigkeit im Fall entgegengesetzter Bewegungsrichtung ist ein Wert von etwa $5 \cdot \sqrt[4]{v_1}$, wobei $v_1$ die Geschwindigkeit der Polymermischung in m/min bei Düsenaustritt bedeutet. Würde man im Fall gleicher Bewegungsrichtung die mittlere Geschwindigkeit der Abkühlflüssigkeit auf den gleichen Wert einstellen, den die Mischung beim Austritt aus der Düse aufweist, so hätte wegen der Geschwindigkeitsverteilung in strömenden Flüssigkeiten die Abkühlflüssigkeit in unmittelbarer Nähe der Mischung einen höheren Wert als die o.a. Düsenaustrittsgeschwindigkeit und würde die Mischung beschleunigen.

Die Geschwindigkeit der Abkühlflüssigkeit, die von ausschlaggebender Bedeutung in der Zone zwischen Eintrittsstelle der Polymermischung in die Abkühlflüssigkeit und der Stelle beginnender Erstarrung der Mischung ist, muß also gesteuert werden. Dies wird dadurch ermöglicht, daß man das Niveau der Abkühlflüssigkeit sowohl an der Eintrittsstelle der Polymermischung in die Abkühlflüssigkeit als auch an der Austrittsstelle konstant hält. Aus diesem Grund befindet sich an der Austrittsstelle eine Überlaufeinrichtung. Neben der apparativen Maßnahme erfolgt die Steuerung der Geschwindigkeit durch entsprechende Zudosierung von Abkühlflüssigkeit. Im Fall eines stationären Bades, d.h. in dem Fall, wo die Geschwindigkeit der Abkühlflüssigkeit den Wert Null hat, bedeutet Zudosierung natürlich nur den Ausgleich von Verlusten. Das Niveau der Abkühlflüssigkeit an der Eintritts- und an der Austrittsstelle wird nicht nur konstant gehalten, sondern das Niveau ist an beiden Stellen auch gleich hoch.

Ein besonderer Vorteil des Verfahrens besteht neben der Möglichkeit, niedrigviskose Polymermischung zu verarbeiten, darin, daß wegen des konstanten Niveaus der Abkühlflüssigkeit und der niedrigen Strömungsgeschwindigkeit der Abkühlflüssigkeit ein breiter Spielraum gegeben ist, was Viskosität und Temperatur der Abkühlflüssigkeit und damit Art der Abkühlflüssigkeit betrifft. Bei bekannten Verfahren ist dieser Spielraum wesentlichen beschränkter wegen der damit verbundenen mechanischen Beanspruchung der noch nicht stabilisierten Polymermischung.

Für die Erfindung ist es wesentlich, daß die Polymer/Mischungspartner-Mischung zwischen dem Zeitpunkt, wo sie die Düse verläßt und dem Zeitpunkt der beginnenden Erstarrung so wenig wie möglich mechanisch beansprucht wird, sei es durch Zug-oder durch Scherkräfte. Insbesondere darf die Mischung in diesem Bereich nicht durch die Abkühlflüssigkeit stark mechanisch beeinflußt werden, wie z.B. durch Beschleunigung. Neben der oben erwähnten Steuerung der Geschwindigkeit der Abkühlflüssigkeit erreicht man dies dadurch, daß die Mischung in einer ersten Zone, die von der Eintrittsstelle der Mischung in die Abkühlflüssigkeit bis zur Stelle beginnender Erstarrung reicht, von oben nach unten geführt wird. Diese Zone stellt einen von Wänden umgebenen relativ engen Kanal dar, z.B. in Form eines zylindrischen Rohres, dessen Durchmesser deutlich niedriger ist als seine Länge. Die Stelle beginnender Erstarrung der Mischung, bis zu der die mechanische Beanspruchung möglichst gering gehalten werden muß, läßt sich auf einfache Weise ermitteln. Dies geschieht durch Beobachtung der Veränderungen, welche die Mischung nach ihrem Austritt aus der Düse erfährt. Zuerst findet infolge Abkühlung die Entmischung in zwei flüssige Phasen statt. Der Ausbildung zweier Phasen geht ein Viskositätsanstieg voraus. Mit der Ausbildung zweier Phasen beginnt eine Eintrübung der Mischung, die sich bis zur beginnenden Erstarrung verstärkt. Da die Erstarrung an den äußeren Schichten beginnt und dann erst nach innen fortschreitet, nimmt die optisch wahrnehmbare Eintrübung nur zwischen dem Zeitpunkt der Entmischung bis zur beginnenden Erstarrung zu und verändert sich dann nicht mehr. Die Stelle beginnender Erstarrung ist also diejenige Stelle, bei der keine Zunahme der Eintrübung mehr feststellbar ist. Sie läßt sich leicht und ziemlich genau bestimmen.

Erst nach der Stelle beginnender Erstarrung besitzt der sich bildende Formkörper eine gewisse Stabilität, die etwas stärkere mechanische Beanspruchung zuläßt. Daher darf sich die Umlenkeinrichtung erst nach dieser Stelle befinden.

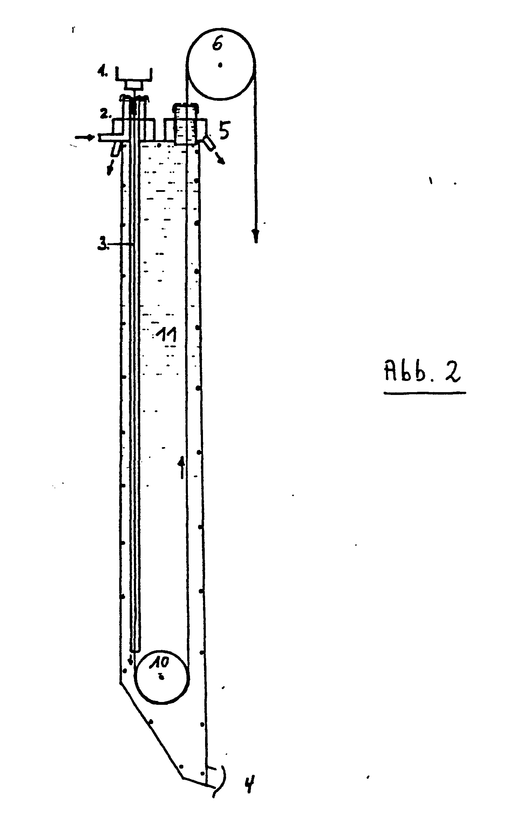

Es ist jedoch nicht nötig, daß sie unmittelbar nach dieser Stelle angebracht ist. Nach der Umlenkung durchläuft der teilweise oder vollständig gebildete feste Formkörper eine zweite Zone der Abkühlflüssigkeit, in der er von unten nach oben geführt wird. Umlenkung und Führen von unten nach oben sind nötig, um eine Vorrichtung verwenden zu können, in der sowohl Eintrittsstelle als auch Austrittsstelle der Abkühlflüssigkeit auf konstantem Flüssigkeitsniveau gehalten werden können. Diese zweite Zone, in welcher der Formkörper von unten nach oben geführt wird, muß nicht wie die erste Zone kanalförmig, sondern kann eine Zone mit breiteren Abmessungen sein, z.B. in Form einer Wanne, wie sie Abbildung 2 zeigt. Sie darf jedoch nicht mit der ersten Zone zusammenfallen, d.h. der Formkörper darf nicht in der kanalförmigen ersten Zone zwischen Eintrittsstelle und der Stelle beginnender Erstarrung von unten nach oben geführt werden.

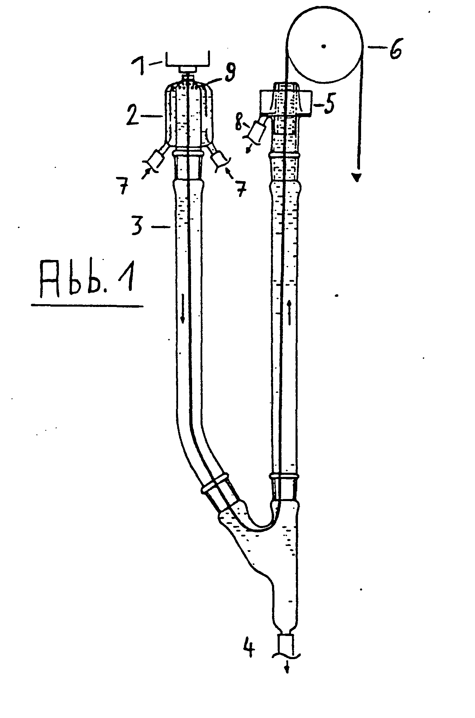

Die zweite Zone kann jedoch auch als kanalförmige Zone ausgebildet sein, wie es z.B. der Fall ist, wenn als Vorrichtung ein U-förmig gebogenes Rohr, wie in Abbildung 1 gezeigt, verwendet wird.

Die Dichte der Abkühlflüssigkeit kann höher oder niedriger als die der Polymer/Mischungspartner-Mischung sein. Es ist jedoch vorteilhaft, wenn die Abkühlflüssigkeit an der Stelle, an der die Polymer-Mischungspartner-Mischung in sie eintritt, ein geringfügig niedrigeres, d.h. bis zu 20% vom spezifischen Gewicht der Polymer/Mischungspartner-Mischung nach unten abweichendes, spezifisches Gewicht besitzt. So verhindert man ein zu rasches Absacken der Mischung bzw. eine zu starke Abbremsung aufgrund großer Dichteunterschiede. Dieser geringfügige Unterschied im spezifischen Gewicht läßt sich neben der Wahl einer bestimmten Abkühlflüssigkeit auch dadurch erzielen, daß man als Abkühlflüssigkeit ein Gemisch bestimmter Zusammensetzung verwendet.

Ähnliche Effekte kann man auch dadurch erzielen, daß man bei der Herstellung von Hohlfäden oder Schäuchen Innenfüllflüssigkeiten unterschiedlicher Dichte verwendet. Dadurch kann erreicht werden, daß die extrudierte Mischung sich so verhält, als ob sie ein spezifisches Gewicht besäße, das zwischen ihrem eigenen und dem der Innenfüllflüssigkeit liegt.

Als Abkühlflüssigkeit können in Prinzip beliebige Flüssigkeiten verwendet werden, in denen sich das Polymer bei der Temperatur der Abkühlflüssigkeit nicht wesentlichen löst und die keine chemische Veränderung des Polymers bewirken.

Neben anderen Flüssigkeiten hat sich Wasser, das gegebenenfalls ein Tensid zur Verminderung der Oberflächenspannung enthält, als geeignet erwiesen. Temperaturen von 20 bis 80°C sind bevorzugt.

Das Abziehen des gebildeten Formkörpers aus der Abkühlflüssigkeit kann nach bekannten Verfahren geschehen, wobei dafür Sorge zu tragen ist, daß durch das Abziehen keine starke mechanische Beanspruchung der Mischung zwischen Düsenaustritt und beginnender Erstarrung hervorgerufen wird.

Es kann darüber hinaus gegebenenfalls von Vorteil sein, den Formkörper mit der gleichen Geschwindigkeit aus der Abkühlflüssigkeit abzuziehen, welche die Mischung beim Austritt aus der Düse besitzt.

Nach dem Abziehen des Formkörpers aus der Abkühlflüssigkeit wird der gebildete Formkörper gewaschen bis alle Bestandteile außer dem bzw. den Polymeren vollständig oder nahezu vollständig entfernt sind. Dies kann durch eine Extraktion erfolgen, die sich kontinuierlich an die Herstellung des Formkörpers anschließt oder die diskontinuierlich durchgeführt wird. Nach der Extraktion wird der Formkörper getrocknet.

Durch die beschriebenen Verfahrensschritte gelingt es, Poren aufweisende Formkörper, z.B. Polymer-Membranen in Form von Hohlfäden, Schläuchen oder Folien herzustellen, die sich durch gute Formstabilität auszeichnen. Es können außer Membranen aber auch poröse Polymer-Fäden nach dem Verfahren hergestellt werden. Durch die Verfahrensschritte gelingt es, die mechanische Belastung, der die Polymer-Mischung bis zum Zeitpunkt der beginnenden Erstarrung, also beginnender Formstabilität, ausgesetzt ist, niedriger zu halten als bei bekannten Verfahren. Dadurch wird es ermöglich, auch relativ niedrigviskose Mischungen zu Polymer-Formkörpern zu verarbeiten, was nach bisher bekannten Verfahren nicht oder nur bedingt möglich ist. Nach dem erfindungsgemäßen Verfahren lassen sich Produkte gleichbleibender und reproduzierbarer Qualität erzeugen, während bei Herstellung nach bisher bekannten Verfahren, speziell im Fall der Verarbeitung niedrigviskoser Polymermischungen, unkontrollierbare Qualitätsschwankungen auftreten, die sich häufig auf zu große mechanische Beanspruchung der noch nicht erstarrten bzw. formstabilisierten Polymermischungen zurückführen lassen. Das erfindungsgemäße Verfahren gestattet es, die Porengröße und -charakteristik durch Variation von Verfahrenparametern in weiten Bereichen reproduzierbar und gezielt einzustellen.

Durch das erfindungsgemäße Verfahren wird es ermöglicht, daß man auch Mischungen mit einem Polymergehalt von unter 15 Gew.-% ohne große Schwierigkeiten zu Membranen verformen kann, was bisher nicht oder nur unter größten Schwierigkeiten möglich war, weil insbesondere dabei große Nachteile im Hinblick auf das Porensystem in Kauf zu nehmen waren. Es ist möglich, Gemische mit Konzentrationen von 10 Gew.-% Polymer und darunter zu verarbeiten. Gemäß dem erfindungsgemäßen Verfahren können grundsätzlich alle Polymeren verarbeitet werden, die schmelzbar sind und für die ein Mischungspartner existiert, der mit dem Polymer ein Zustandsdiagramm der Art bildet, wie es weiter oben erwähnt wurde. Dazu gehören u.a. Polyolefine wie Polypropylen, Polyäthylen, Polymethylpenten usw. sowie entsprechende Copolymere.

Durch das beschriebene Verfahren, insbesondere durch die geringe mechanische Beanspruchung bis zur beginnenden Erstarrung, werden Poren aufweisende Polymer-Formkörper erhalten, deren Formstabilität gut ist und die konstante gute Qualität aufweisen. Brüche und Qualitätsschwankungen wie unkontollierbare Fehlstellen min Form vom Soll abweichender Porengrößen und -charakteristik, sind auf ein Minimum beschränkt.

Die erhaltenen Formkörper weisen Poren an jeder ihrer Oberflächen auf, d.h. auch die Innenflächen von Hohlfäden oder Schläuchen weisen Porenöffnungen auf. Auf Grund des breiten Spielraums, der bezüglich Art und Menge des Lösungsmittels, Art und Menge des Nichtlösers, Art, Menge und Durchsatz der Abkühlflüssigkeit sowie der Temperaturführung während des gesamten Prozesses gegeben ist, lassen sich Porengröße und -charakteristik des Polymer-Formkörpers in weiten Bereichen gezielt und reproduzierbar einstellen. So ist es möglich, mittlere Porengrößen von etwa 0,1 µ bis etwa 5 µ zu erhalten. Das Gesamtporenvolumen läßt sich ebenfalls in weiten Bereichen, z.B. über das Gewichtsverhältnis Polymer-Mischungspartner beeinflussen und liegt etwa zwischen 10 und 90%. Es können je nach Einstellung verschiedener Verfahrensparameter unterschiedliche Charakteristiken des Porensystems erhalten werden. Je nach Art und Menge des Lösungsmittels sowie gegebenenfalls des Nichtlösers, Art, Menge und Durchsatz der Abkühlflüssigkeit sowie je nach Temperaturführung in der Abkühlvorrichtung, können prinzipiell zwei verschiedene Arten von Porenstrukturen erhalten werden, zwischen denen Übergänge möglich sind:

a) ein Porensystem mit im wesentlichen kugelförmigen Hohlräumen, die durch poröse Zwischenwände voneinander getrennt sind. Die Poren der Zwischenwände weisen einen kleineren mittleren Durchmesser auf als die kugelförmigen Hohlräume.

b) ein dreidimensionales Netzwerk von Poren, die nur durch schmale Zwischenstege, nicht aber durch Zwischenwände getrennt sind.

Neben diesen beiden Möglichkeiten der Ausgestaltung des Porensystems kann dieses noch in einer anderen Weise beeinflußt werden. So läßt sich vor allem über Variation der Viskosität der Polymermischung und von Art und Temperatur der Abkühlflüssigkeit entweder ein isotropes oder anisotropes Porensystem erhalten. Bei einem anisotropen Porensystem weisen Porengröße und/oder -struktur einen Gradienten in der Richtung von der Oberfläche in das Innere des Formkörpers auf. Die Asymmetrie kann z.B. erreicht werden, wenn bei der Herstellung von Membranen in Form von Hohlfäden oder Schläuchen die chemische Zusammensetzung der Innenflüssigkeit und der Abkühlflüssigkeit und/oder deren Temperatur differieren.

Die erfindungsgemäß hergestellten Polymer-Formkörper lassen sich vielseitig verwenden, so z.B. für die Mikrofiltration von wäßrigen Lösungen und von Lösungen in organischen Lösungsmitteln.

Für den Fall, daß als Polymeres PVDF verwendet wird, ergeben sich für die hergestellten PVDF-Formkörper weitere vielseitige Verwendungsmöglichkeiten. In vielen Fällen bieten sich hierbei PVDF-Membranen an, weil sie eine außergewöhnliche Resistenz gegen einen oxidativen Angriff zeigen, beständig gegen eine ungewöhnlich große Anzahl von organischen Lösungsmitteln sind und ihre mechanischen Daten erst bei Temperaturen in der Nähe des Schmelzpunktes deutlich abfallen. Im Fall der Filtration wäßriger Lösungen können PVDF-Membranen auch dort Anwendung finden, wo andere Polymere wegen ihrer Anfälligkeit im stark sauren oder stark alkalischen pH-Bereich nicht eingesetzt werden können, so z.B. bei der Filtration von Hypochloritlösungen.

Die erfindungsgemäß hergestellten Membranen eignen sich auch für die Transmembrandestillation. Bei der Transmembrandestillation, bei der die kurze Diffusionsstrecke (Membranwanddicke) zum Eindampfen von wäßrigen Lösungen genutzt wird, befindet sich auf der einen Seite der Membran die erhitzte, einzuengende Lösung, auf der anderen Seite "Kühlwasser". Durch den Dampfunterschied wandert Wasser als Gas von der heißen zur halten Seite der Membran. Hier kann von der Temperaturbeständigkeit, der niedrigen Oberflächenspannung des PVDF, die einen Durchbruch von wäßriger lösung verhindert, und der bei Reinigungszyklen nötigen oxidativen Beständigkeit vorteilhaft Gebrauch gemacht werden.

Polymer-Hohlmembranen mit anisotroper Struktur, bei denen die Porengröße von innen nach außen abnimmt, können die Verwendung eines Vorfilters bei der Mikrofiltration überflüssig machen. Eine Vorfiltration wird häufig eingesetzt, um große Partikel abzufangen, die zu einer Membranbelegung und damit zu einem schnellen Flußabfall führen. Diese großen Partikel werden in den anisotropen Membranstrukturen jedoch in den großen, inneren Poren festgehalten, ohne die filtrierende Fläche dabei zu reduzieren. Die sogenannte "dirt capacity" der anisotropen Polymer-Membran ist also entsprechend größer als im Fall isotroper Strukturen.

Zur Durchführung des erfindungsgemäßen Verfahrens ist besonders eine Vorrichtung geeignet, die gekennzeichnet ist durch eine Düse zum Extrudieren eines homogenen, einphasigen, flüssigen Gemisches von oben nach unten und eine Abkühlflüssigkeit enthaltende Abkühlvorrichtung in Form eines gleichschenkeligen U-Rofrs mit einer kanalförmigen, von einer Wand umgebenen Zone (3), welche von der Eintrittsstelle der Polymer/Mischungspartner-Mischung bis mindestens zum Punkt der beginnenden Erstarrung der Mischung reicht, einer Umlenkeinrichtung unterhalb des Punktes der beginnenden Erstarrung und eine Abzugsvorrichtung (6) für den gebildeten Formkörper und einer oder mehreren Öffnungen für den Zu- oder Ablauf der Abkühlflüssigkeit.

Es ist sehr zweckmäßig, wenn die Vorrichtung einen Zulauf für die Abkühlflüssigkeit mit mehreren symmetrisch angeordneten Öffnungen besitzt. Vorzugsweise besitzt die Vorrichtung einen Überlauf für die Zudosierung der Abkühlflüssigkeit. Sie kann auch einen Überlauf für den Abfluß der Abkühlflüssigkeit besitzen.

Die Vorrichtung kann mit einer externen Thermostatisierung versehen sein.

In einer besonders vorteilhaften Ausführungsform der erfindungsgemäßen Vorrichtung besteht ein Luftspalt zwischen Düse und dem Niveau der Abkühlflüssigkeit an der Eintrittsstelle des Polymer/Mischungspartner-Gemisches.

In einer weiteren besonders vorteilhaften Ausführungsform der erfindungsgemäßen Vorrichtung ist dieselbe in Form einer kastenförmigen Ausführung der Abkühlvorrichtung mit Sichtscheibe gestaltet.

Mit der erfindungsgemäßen Vorrichtung ist es möglich, das Niveau der Abkühlflüssigkeit gezielt einzustellen, insbesondere bei Verwendung von Überlaufgefäßen, sei es an der Eintrittsstelle der Mischung, sei es an der Austrittsstelle des Formkörpers, sei es gleichzeitig an Eintrittsstelle und an der Austrittsstelle.

Die erfindungsgemäße Ausführungsform der Vorrichtung für die Durchführung des Verfahrens, bei der die Abkühlvorrichtung mit einer Sichtscheibe versehen ist, ist deshalb besonders vorteilhaft, weil man mit einer derartigen Vorrichtung, sehr genau den Punkt der beginnenden Erstarrung beobachten kann. Dies ist einmal von Bedeutung beim Beginn der Herstellung des Formkörpers. Da man die Umlenkvorrichtung unterhalb des Punktes der beginnenden Erstarrung anbringen muß, ist es von Vorteil, die Lage des Erstarrungspunktes genau beobachten zu können, so daß man die Umlenkeinrichtung entsprechend anordnen kann.

Sehr günstig ist es auch, mit einer derartigen Vorrichtung zu arbeiten, wenn man die Verfahrensparameter ändern will, so daß sich der Erstarrungspunkt verfahrensmäßig bedingt verlagert. Ferner ist die Sichtscheibe eine wertvolle Hilfe beim sogenannten Anspinnen, bei dem man den gebildeten Formkörper zunächst aus der Abkühlflüssigkeit herausziehen muß, um ihn auf die Abzugsvorrichtung zu bringen.

Eine bevorzugte Ausführungsform der Abkühlvorrichtung besteht in einem U-förmig gebogenen Rohr, wie es in Abbildung 1 gezeigt ist, es können jedoch auch Ausführungsformen wie in Abbildung 2 dargestellt, verwendet werden. Abbildung 1 zeigt eine U-förmige gebogene Vorrichtung mit folgenden Bestandteilen:

1. Düse
2. Kühlflüssigkeitszudosier- und Temperieraufsatz
3. Stabilisierungszone des Hohlfadens
4. Ablauf für Kühlflüssigkeit (für Reinigungszwecke)
5. Überlauftasse mit Niveaureguliereinrichtung für Kühlflüssigkeit
6. Abzugsrad
7. Kühlflüssigkeitszuführung vom Thermostat
8. Kühlflüssigkeitsablauf zum Thermostat
9. Symmetrisch angeordnete Löcher für das Zudosieren von Abkühlflüssigkeit

Beschreibung der Abbildung 1:
Um eine gute Beobachtungsmöglichkeit, während des Prozesses zu schaffen, ist das U-Rohr größtenteils in Glas ausgeführt.

Das im wesentlichen aus fünf Teilen zusammengesetzte Rohr hat einen Durchmesser von ca. 4 cm bei einer Schenkellänge von ca. 1 m.

a) Kühlflüssigkeitszudosier- und Temperieraufsatz
Um möglichst rasch die von der Zuführung der Polymer/Mischungspartner-Mischung hervorgerufene Temperaturänderung auszugleichen, ist in dieser Ausführungsform die Eintrittsstelle für die Abkühlflüssigkeit nahe der Eintrittsstelle der Mischung. Der Temperiermantel unterstützt diese Funktion. Gleichzeitig sorgen dieser Außenmantel und die Zudosieröffnungen am oberen Rohrende für eine Verteilung der Flüssigkeitsströmungen und erlauben eine möglichst schonende Behandlung der hier noch instabilen Polymermischung. Die ca. 5 cm² Oberfläche aufweisende Eintrittsöffnung des Abkühlrohrs gewährleistet einerseits genügend großen Spielraum für dünne und dicke Hohlfäden oder Schläuche und reduziert andererseits eine größere Oberflächenunruhe des Abkühlbades.

b) Einlaufschenkel des U-Rohres (1. Zone):

In diesem Bereich durchläuft die Polymer/Mischungspartner-Mischung, die beispielsweise zu einem porösen Hohlfaden verarbeitet werden soll, bei der Abkühlung das Stadium der Entmischung in zwei flüssige Phasen und der Erstarrung Je nach Rezeptur, Düsentemperatur bzw. Abkühlbedingungen kann die beginnende Erstarrung bzw. die Stabilisierung im ersten oder zweiten Drittel des Rohres beobachtet werden. Man erkennt dies daran, daß der anfänglich transparente Faden zunehmend milchig wird und von der Stelle beginnender Erstarrung an eine bestimmte Endtrübung beibehält.

c) Umlenkung des Formkörpers

Der stabilisierte Formkörper kann umgelenkt werden, ohne daß er deformiert wird. Im Gegensatz zu anderen Ausführungsformen der Abkühl-ist Vorrichtung ist hier kein Unlenkrad bzw. keine Walze installiert. Die nach der 1. Zone nach unten gerichtete Rohrfortsetzung erlaubt eine günstige Handhabung beim Anspinnen. Der absinkende Formkörper, z.B. hohlfaden sammelt sich hier und kann mittels Draht aus dem Auslaufschenkel (2. Zone) gezogen und auf das Abzugsrad gelegt werden.

d) Auslaufschenkel

Diese Einrichtung ist in Metallausgeführt. Der höhenverstellbare Mittelteil bestimmt die Überlaufhöhe des Abkühlmediums und somit auch die niveaugleiche Höhe der Abkühlflüssigkeit unter der Spinndüse. So läßt sich auf einfache Weise ein Luftspalt zwischen Düse und Abkühlflüssigkeit einstellen.

Bestandteile der in Abbildung 2 dargestellten Vorrichtung:

1. Düse
2. Abkühlflüssigkeitszudosierung mit Abkühlrohr, Zulauftasse und Überlaufauffangwanne
3. Abkühlrohr (durchsichtig)
4. Ablauf für Kühlflüssigkeit (für Reinigungszwecke)
5. Überlaufeinrichtung mit Niveauregulierung (einstellbar: Niveaugleich zum Einlauf)
6. Abzugsrad
10. Umlenkrolle
11. Abkühlkasten mit Sichtscheibe
Die Erfindung wird durch folgende Beispiele näher erläutert.

## Beispiel 1

In einer Hohlfaden-Spinnapparatur mit kontinuierlich arbeitendem Lösungsherstellungsteil wurde eine Mischung bestehend aus 14 Teilen AKULON 6 (Polyamid 6 — Fa. AKZO-Plastics bv) mit einer relativen Lösungsviskosität von 4.7 (gemessen in Ameisensäure) und 86 Teilen einer Lösungsmittelmischung zusammengesetzt aus ca. 75% Glycerin (< 0.05% Wasser) und ca. 25% Äthylenglykol (< 0,05% Wasser) mit Zugabe von 0,25% des Verdickungsittel Carbopol 934 (Fa. Goodrich), bezogen auf Lösungsmittel hergestellt, und sofort versponnen. Um möglichst geringen Abbau des Polymers zu garantieren, war die Anlage so ausgelegt, daß kurze Verweilzeiten (ca. 10 Min. ab Lösungsherstellungsbeginn) bei möglichst schonenden Temperaturbedingungen gewährleistet werden konnten.

Zur Lösungsherstellung wurde das Polymergranulat (< 0,02% Wasser) mittels Extruder bei ca. 280°C aufgeschmolzen und mit einer Zahnradpumpe der auf ca. 180°C beheizten Mischkammer zugeführt. Der mit ca. 170 U/Min laufende Mischer sorgte dafür, daß die ebenfalls auf ca. 180°C temperierte zudosierte Lösungsmittelmischung mit der Polymerschmelze eine homogene, mittelviskose, klare Lösung bildete. Vor der Ausformung zum Hohlfaden wurden filtriert.

Die Hohlfadendüse war auf 150°C—155°C temperiert. Als Innenfüllmedium diente eine Mischung auf Glycerin/PEG 300 1:1. Nach Passieren einer Luftstrecke von ca. 0,5 cm trat der Faden in das gemäß Abbildung 1 dargestellte 2 Meter lange, U-förmige, mit 50°C warmen Wasser beschickte Glas-Rohr ein. Nach eintritt in das Abkühlmedium sank der Faden langsam in den unteren Teil des Rohres und wurde mittels einem Draht aus dem Auslaufschenkel gezogen und auf das Abzugsrad gelegt. Die Düsenaustrittsgeschwindigkeit der Polyamidlösung betrug ca. 15 m/min, die mittlere Abkuhlbadgeschwindigkeit ca. 1 m/min.

Deutlich konnte beobachtet werden, wie die dünnflüssige bis mittelviskose Polymerlösung nach kurzer Verweilzeit im Wasser bei beginnender Phasentrennung milchig und schließlich bei Erstarren soweit stabilisiert wurde, so daß er ohne Deformation gelenkt und kontinuierlichmit einer Geschwindigkeit von 20 m/Min abgezogen werden konnte. Nach Extraktion der Lösungsmittel und des Verdickungsmittels mit 60°C warmen Wasser und einer anschließenden Spülung mit 50°C warmen Aceton konnte der Faden bei 50°C getrocknet werden.

Eigenschaften der erhaltenen Hohlfadenmembran:

| | |
|---|---|
| Außendurchmesser: | 1,0 mm |
| Innenlumen: | 0,55 mm |
| maximale Porengröße: | 1,40 µm |
| Fluß (Wasser) in 1/m²/h bei 1,0 bar: | 17 600 |
| Lösungsviskosität: | 4,65 |
| Längenschrumpf durch Extraktion und Trocknung: | 8% |

Zur Messung der maximalen Porengröße der Hohlfäden in Äthanol getaucht und von innen mit Stickstoff beschickt. Gemessen wurde der Druck, bei welchem das Äthanol aus den Wandungen des Hohlfadens durch Stickstoff verdrängt wurde und außenseitig erste Gasblasen zu erkennen waren.

Aus dem gefundenen Wert ("Blaspunkt") errechnet sich die maximale Porengröße

$$d_{max} = \frac{0{,}635}{P_{max} \text{ (Blaspunkt) bar}} = \text{µm}$$

wobei
$d_{max}$ = maximaler Porendurchmesser in µm, $P_{max}$ Messdruck bei 1. Durchbruch in bar

$$\text{Beispiel: } d_{max} = \frac{0{,}635}{0{,}62 \text{ bar}} = 1{,}02 \text{ µm}$$

Zur Ermittlung des Transmembranen-Wasserflusses wurde der Hohlfaden von innen mit vollentsalztem Wasser beschickt und die Durchflußmenge durch die Membran bei 1,0 bar gemessen.

Mikroskopische Untersuchungen zeigten Porenstruktur mit Öffnungen an Innen- und Außenwänden.

Eine Probe der aus der Düse kommenden Polymerlösung wurde in einem temperierten Glasgefäß aufgefangen. Unter Rühren wurde die Temperatur der Lösung abgesenkt und eine Erstarrungstemperatur von ca. 150°C ermittelt.

## Beispiel 2

Analog einer diskontinuierlichen Arbeitsweise der Lösungsherstellung, das Polymer direkt in dem Lösemittelgemisch bei Temepraturen, die deutlich unter dem Erweichungsbereich des Polyamides liegen, aufzulösen, wurde hier nach folgendem Prinzip in kontinuierlicher Form in polymerschonender Methode gearbeitet.

Das Polymer wurde in pulverisierter Form in dem Lösemittelgemisch (inclusiv Verdickungsmittel) angeteigt und mittels Hubkolbenpumpe einem Doppelschneckenextruder zugeführt und dort bei ca. 160—170°C aufgelöst. Nach kurzer Verweilzeit wurde die homogene Polymermischung der Kohlfadendüse zugeführt und wie in Beispiel 1 bei ca. 145°C versponnen.

Die Zusammensetzung der Mischung war:

15% Perlon LV 3.67 (Fa. Enka) < 0,02% Wasser

85% Äthylenglykol/Glycerin 1:1 < 0,05% Wasser mit einem Zusatz von 0,3% Verdickungsmittel Carbopol 934.

Für die Ausbildung des Innenlumens diente Glycerin. Nach der in Beispiel 1 beschriebenen Weise durchlief der gebildete Hohlfaden das U-förmige Abkühlrohr. Nach Extraktion der Lösemittel inclusiv Verdickungsmittel und Trocknung wurde die poröse Hohlfaden-Membran geprüft.

-Testwerte:

| | |
|---|---|
| Hohlfadendurchmesser: | 1,2mm |
| Innenlumen: | 0,6 mm |
| maximale Porengröße: | 0,6 µm |
| Transmembranfluß: | 5 600 l/m²/h bei 1,0 bar |
| Wasser | |

In diesem Ausführungsbeispiel fungierte Äthylenglykol als Lösemittel und Glycerin als Nichtlöser bzw. Quellmittel bei den gegebenen Temperatureinstellungen.

|  | Lösetemp. | Erstarrungstemp. |
|---|---|---|
| 15% Perlon LV 3,67 + 85% Äthylenglykol | ca. 145°C | ca. 130°C |
| 15% Perlon LV, 3,67 + 42,5% Äthylenglykol 42,5% Glycerin | ca. 160°C | ca. 143°C |
| 15% Perlon LV 3,67 + 85% Glycerin | ca. 175°C | ca. 156°C |

## Beispiel 3

In der in Beispiel 1 beschriebenen Apparatur wurde eine Mischung bestehend aus ca. 15 Teilen AKULON 6 LV 4,7 und 85 Teilen einer Lösemittelkombination Äthylenglykol/Polyglykol (Molekulargewicht 1 500) im Verhältnis 87,5: 12,5 und einer Zusatzmenge von 0,3% Carbopol 934 bei ca. 180°C zu einer homogenen Lösung überführt und anschließend zu einem Hohlfaden versponnen. Nach Extraktion und Trocknung in der beschriebenen Weise entstand ein poröser Hohlfaden mit allseitig offener Oberfläche.

Parallel zu dieser Spinnung wurde in einem beheizbaren Glaskolben eine Mischung mit gleicher Zusammensetzung eingewogen und unter Stickstoffatmosphäre bei ständigem Rühren langsam aufgeheizt (ca. 2°C/Min). Deutlich konnte man beobachten, wie das im Lösemittel bewegte Polymergranulat ab ca. 140—145°C anfänglich angequollen und bei steigender Temperatur angelöst wurde. Es entstand eine gelig, trübe Mischung, die über 175°C bei Bildung einer homogenen Lösung klar und transparent wurde.

Bei langsamen Abkühlen dieser Mischung bildete sich ab ca. 175°C die beginnende Phasentrennung mit eintrübung der Lösung aus. Mit abnehmender Temperatur separierte sich immer mehr die polymerreiche von der polymerarmen Phase bis schließlich bei ca. 138°C die höherkonzentrierte Phase erstarrte.

Bei dieser Polymer-Mischung diente Äthylenglykol als Lösemittel und Polyäthylenglykol 1 500 als Nichtlöser. Je nach Zugabemenge an Nichtlöser kann die Temperatur variiert werden, bei welcher sich die homogene Lösung bildet und verändert somit die Spanne zur Ausbildung der zwei Phasen bis zur Erstarrung, was zur unterschiedlichen Porenausbildung führen kann.

## Beispiel 4

In einem beheizbaren Glasflanschkolben wurden 17,5% Perlon LV 3,67 und 82,5% einer Mischung bestehend aus 45 Teilen Caprolactam und 55 Teilen Polyäthylenglykol 300 (Molekular-Gewicht) bei ca. 200°C aufgelöst. Unter Stickstoffatomosphäre und ständigem Rühren war rasch eine homogene, dünnviskose klare Lösung erzielt. Dieser Ansatzt konnte in der in vorhergehender Hohlfaden-Spinnanlage verarbeitet werden. Bei einer Düsentemperatur von ca. 210°C wurde der Hohlfaden geformt. Als Innenfüllmedium diente Polyäthylenglykol 300. Das Abkühlbad im U-förmigen Abkühlrohr war Wasser von 45°C.

Der erstarrte Faden konnte in üblicher Weise extrahiert und getrocknet werden. Mikroskopische Untersuchungen zeigten eine sehr gleichmäßige Porenstruktur über Membranquerschnitt mit Öffnungen an Außen- und Innenoberfläche.

Testwerte:

| | |
|---|---|
| Außendurchmesser: | 1,2 mm |
| Innenlumen: | 0,85 mm |
| maximale Porengröße: | 0,29 µm |
| Transmembranfluß: Isopropanol | 0,31 ml/cm$^2$/Min · 0,1 bar |

Der Transmembranfluß wurde mit Isopropanol ermittelt.

Analog der Messung mit Wasser wird hier der Hohlfaden von innen mit Isopropanol beschickt (35°C) und die Durchflußmenge durch die Membran bei 0,1 bar gemessen.

## Beispiel 5

In ein beheizbares Glasgefäß wurde eine Mischung aus 20 Gew-Teilen Polyvinylidenfluorid — PVDF (Solef 1012, LV = 2,68 gemessen in Dimethylformamid) (Fa. Solvay, Belgien) und 80 Gew-Teilen einer Lösungsmittelmischung bestehend aus 37,5% Glycerintriacetat (Löser) und 62,5% Witamol 320 (Nichtlöser-Dioctyladipat — Fa. Dynamit Nobel) gegeben. Unter intensivem Rühren und in Stickstoffatmosphäre wurden das Polymergranulat und das Lösungsmittelgemisch auf ca. 215°C gebracht. Bei ca. 145°C wurde das Granulat angequollen und bei steigender Temperatur bildete sich eine homogene niedrigviskose Lösung.

Ein Teil der so hergestellten Lösung wurde bei ca. 220°C durch eine Hohlfadendüse einer Spinnmaschine in das in Abbildung 1 dargestellte U-förmige Rohr mit einer Geschwindigkeit von 15 m/min extrudiert. Für die Ausbildung des Lumens des Fadens wurde destilliertes Glycerin als Innenfüllung benützt. Nach Passieren einer Luftstrecke von ca. 1 cm trat der Faden in das mit Wasser von ca. 25°C beschickte ca. 2 m lange U-förmige Glas-Rohr ein. Nach Eintritt in das Abkühlmedium sank der Faden langsam in den unteren Teil des Rohres und wurde mittels eines Drahtes aus dem Auslauf-Schenkel gezogen und auf ein Abzugsrad gelegt. Während des Prozesses durchströmte das Wasser mit einer mittleren Geschwindigkeit von 1 m/min in gleicher Richtung wie die Polymermischung die Vorrichtung. Deutlich konnte beobachtet werden, wie die dünnflüssige Polymerlösung nach kurzer Verweilzeit im Wasser bei beginnender Phasentrennung milchig und schließlich beim Erstarren stabilisiert wurde, so daß ohne Deformation umgelenkt und kontinuierlich mit einer Geschwindigkeit von 20 m/min abgezogen werden konnte.

Nach Extraktion der flüssigen Bestandteile mittels 50°C warmen Isopropanol wurde der Faden Bei ca. 50°C im Vakuum getrocknet.

Eigenschaften der erhaltenen Hohlfadenmembran:

| | |
|---|---|
| Außendurchmesser: | 1.24 mm |
| Innenlumen: | 0.88 mm |
| max. Porengröße: | 0.58 µm |
| Transmembranfluß (Isopropanol) in ml/cm² · min bei 0.1 bar: | 0.95 |

Zur Messung der maximalen Porengröße wurde der Hohlfaden in Äthanol getaucht und von innen mit Stickstoff beschickt. Gemessen wurde der Druck, bei welchem das Äthanol aus den Wandungen des Hohlfadens durch Stickstoff verdrängt wurde und außenseitig erste Gasblasen zu erkennen waren.

Aus dem gefundenen Wert ("Blaspunkt") errechnet sich die maximale Porengröße

$$d_{max.} = \frac{0.635}{P_{max.}} \ \mu m$$

wobei $d_{max.}$ = maximaler Porendurchmesser, $P_{max.}$ = Blaspunkt in bar.

Zur Ermittlung des Isopropanolflusses wurde der Hohlfaden von innen mit auf 35°C temperiertem Isopropanol beschickt und die Durchflußmenge bei 0,1 bar gemessen.

Mikroskopische Untersuchungen zeigten Porenstruktur mit Öffnungen an Innen- und Außenwänden. Es resultierte eine im wesentlichen kugelförmige Poren aufweisende Struktur.

### Beispiel 6

Es wurden 30 Gew-Teile PVDF (Solef 1012) und 70 Teile 2-(2-Butoxy-äthoxy-) äthylacetat bei einer Temperatur von ca. 155°C—160°C in eine homogene Lösung mittlerer Viskosität überführt. Bei ca. 120°C—130°C war beginnendes Quellen des Granulates zu beobachten.

Die PVDF-Lösung, deren Erstarrungstemperatur ca. 110°C betrug, wurde analog Beispiel 1 bei ca. 150°C versponnen und in einem Bad aus Glycerin/Wasser (1:1) von 35°C abgekühlt. Der extrahierte und getrocknete Hohlfaden hatte folgende Kenndaten:

| | |
|---|---|
| Außendurchmesser: | 1,20 mm |
| Innenvolumen: | 0,80 mm |
| max. Porengröße: | 0,94 µm |
| Transmembranfluß (Isopropanol) bei 0,1 bar in ml/cm² · min: | 0,57 |

Es resultierte ein Porensystem, das im wesentlichen aus einem dreidimensionalen Netzwerk von Poren bestand.

# EP 0 133 882 B1

## Patentansprüche

1. Verfahren zur Herstellung von Poren aufweisenden Forkörpen durch Extrudieren eines homogenen, einphasigen, flüssigen Gemisches aus einem oder mehreren Polymeren und einem oder mehreren, bei der Temperatur der Herstellung des Gemisches flüssigen Mischungspartnern, wobei das Gemisch oberhalf Raumtemperatur im flüssigen Zustand einen Bereich völliger Mischbarkeit und eine Mischungslücke aufweist und oberhalb Raumtemperatur einen Erstarrungsbereich besitzt, in eine Abkühlflüssigkeit enthaltende Abkühlvorrichtung, wobei man die Polymer/Mischungspartner-Mischung bei einer Temperatur oberhalb der Mischungslücke mit einer mittleren linearen Geschwindigkeit $v_1$ durch eine Düse von oben nach unten in eine Abkühlflüssigkeit fördert, welche bei Abkühltemperatur das Polymer nicht oder nur unwesentlich löst und die eine Temperatur unterhalb des Erstarungspunktes besitzt, und man die extrudierte Mischung von der Eintrittsstelle in die Abkühlflüssigkeit mindestens bis zur Stelle der beginnenden Erstarrung durch eine kanalförmige, von einer Wand umgebene Zone führt, den Formkörper nach beginnender Erstarrung des Polymers umlenkt und von unten nach oben durch eine zweite Zone leitet, den Formkörper aus der Abkühlflüssigkeit abzieht und auswäscht, bis alle Bestandteile außer dem bzw. den Polymeren vollständig oder nahezu vollständig entfernt sind und mann den Formkörper anschließend trocknet, dadurch gekennzeichnet, daß man in der kanalförmigen Zone die mittlere lineare Geschwindigkeit $v_2$ der Abkühlflüssigkeit, gemessen in Bewegungsrichtung der Polymer-Mischungspartner-Mischung, mindestens 20% kleiner hält als $v_1$, daß man das Niveau der Abkühlflüssigkeit sowohl an der Eintrittsstelle der Mischung in die Abkühlflüssigkeit als auch an der Austrittsstelle des Formkörpers aus der Abkühlflussigkeit konstant hält und man die Abkühlflüssigkeit an diesen beiden Stellen auf dem gleichen Niveau hält.

2. Verfahren nach Anspruch 1, dadurch gekennzeichnet, daß man die Abkühlflüssigkeit durch die kanalförmige Zone mit einer mittleren linearen Geschwindigkeit $v_2$ führt, die mindestens um 25% kleiner ist als $v_1$.

3. Verfahren nach Anspruch 1 oder 2, dadurch gekennzeichnet, daß sich die Abkühlflüssigkeit in einem u-förmig gebogenen Rohr befindet.

4. Verfahren nach einem oder mehreren der Ansprüche 1 bis 3, dadurch gekennzeichnet, daß die Abkühlflüssigkeit nahe an der Eintrittsstelle der Mischung in die Abkühlflüssigkeit der Abkühlvorrichtung kontinuierlich zudosiert wird, so daß sie gleichlaufend mit der Richtung der Bewegung der Mischung die Vorrichtung durchströmt und an einer Überlaufeinrichtung an der Austrittsstelle des Formkörpers die Vorrichtung verläßt.

5. Verfahren nach einem oder mehreren der Ansprüche 1 bis 4, dadurch gekennzeichnet, daß man die Abkühlflüssigkeit um die Eintrittsstelle der Mischung herum, in Form eines zusammenhängenden Films, dosiert.

6. Verfahren nach einem oder mehreren der vorangehenden Ansprüche, daudrch gekennzeichnet, daß man die mittlere lineare Geschwindigkeit $v_2$ der Abkühlflüssigkeit gleich 0 hält.

7. Verfahren nach einem oder mehreren der Ansprüche 1 bis 6, dadurch gekennzeichnet, daß man zwischen Düse und der Eintrittsstelle der Polymer-Mischungspartner-Mischung in die Abkühlflüssigkeit einen Luftspalt einhält.

8. Verfahren nach Anspruch 7, dadurch gekennzeichnet, daß man einen 2 bis 20 mm langen Luftspalt einhält.

9. Verfahren nach Anspruch 7 oder 8, dadurch gekennzeichnet, daß der Luftspalt klimatisiert wird.

10. Verfahren nach einem oder mehreren der Ansprüche 1 bis 9, dadurch gekennzeichnet, daß die Abkühlflüssigkeit an der Eintrittsstelle der Mischung in die Abkühlflüssigkeit ein bis zu 20% niedrigeres spezifisches Gewicht als die Mischung an dieser Stelle besitzt.

11. Verfahren nach einem oder mehreren der Ansprüche 1 bis 10, dadurch gekennzeichnet, daß man Polymer-Mischungspartner-Mischungen mit einer Viskosität von 2 bis 25 Pa·s verwendet.

12. Verfahren nach einem oder mehreren der Ansprüche 1 bis 11, dadurch gekennzeichnet, daß man Polymer-Mischungspartner-Mischungen mit 10 bis 25 Gew.% Polymer verwendet.

13. Verfahren nach einem oder mehreren der Ansprüche 1 bis 12, dadurch gekennzeichnet, daß man die Polymer-Mischungspartner-Mischung zu einer Membran in Form eines Hohlfadens, Schlauches oder einer Folie formt.

14. Verfahren nach Anspruch 13, dadurch gekennzeichnet, daß im Fall der Herstellung von Hohlfäden oder Schläuchen das Innenlumen durch Einführen einer Innenfüllflüssigkeit erzeugt wird, die bei der Temperatur der Erzeugung des Innenlumens kein Lösungsmittel für das bzw. die Polymeren darstellt.

15. Verfahren nach Anspruch 14, dadurch gekennzeichnet, daß die Innenfüllflüssigkeit Glycerin ist oder eine Flüssigkeit, die bei der Herstellung der Mischung als Mischungspartner verwendet wurde.

16. Verfahren nach Anspruch 13, dadurch gekennzeichnet, daß im Fall der herstellung von Hohlfäden oder Schläuchen das Innenlumen durch Einführen von gasförmigen Stickstoff erzeugt wird.

17. Verfahren nach einem oder mehreren der Ansprüche 1 bis 16, dadurch gekennzeichnet, daß die Erstarungstemperatur der Mischung oberhalb von etwa 50°C liegt.

18. Verfahren nach einem oder mehreren der Ansprüche 1 bis 17, dadurch gekennzeichnet, daß als Abkühlflüssigkeit Wasser, gegebenenfalls mit einem Zusatz an Tensid, verwendet wird.

# EP 0 133 882 B1

19. Verfahren nach einem oder mehreren der Ansprüche 1 bis 18, dadurch gekennzeichnet, daß bei der Herstellung der Mischung neben mindestens einem Lösungsmittel noch mindestens ein Mischungspartner verwendet wird, der bei der Temperatur der Herstellung der Mischung und ihrer Förderung durch die Düse ein Nichtlöser für das bzw. die Polymere ist.

20. Verfahren nach einem oder mehreren der Ansprüche 1 bis 19, dadurch gekennzeichnet, daß man als Polymer Polyamid 6 verwendet.

21. Verfahren nach einem oder mehreren der Ansprüche 1 bis 19, dadurch gekennzeichnet, daß man als Polymer Copolyamide auf der Basis von Epsilon-Caprolactam und Hexamethylendiamin/Adipinsäure-Salz verwendet.

22. Verfahren nach Anspruch 20 oder 21, dadurch gekenzeichnet, daß man als Mischungspartner ein Gemisch aus Äthylenglykol und Glycerin verwendet.

23. Verfahren nach einem oder mehreren der Ansprüche 2 bis 19, dadurch gekennzeichnet, daß man als Polymer Polyvinylidenfluorid (PVDF) verwendet.

24. Verfahren nach Anspruch 23, dadurch gekennzeichnet, daß bei der Herstellung der Mischung als Lösungsmittel für PVDF eine oder mehrere der Verbindungen Glycerintriacetat, Glycerindiacetat und 2-(2-Butoxyäthoxy-)äthylacetat verwendet wird bzw. werden.

25. Verfahren nach Anspruch 23 oder 24, dadurch gekennzeichnet, daß Di-n-octyladipat oder Rizinusöl oder ein Gemisch hiervon bei der Herstellung der Polymer-Mischungspartner-Mischung als Nichtlöser für PVDF mitverwendet wird.

26. Verfahren nach einem oder mehreren der Ansprüche 20 bis 22, dadurch gekennzeichnet, daß man 0,05 bis 0,3 Gew.-%, bezogen auf Mischungspartner, eines Verdickungsmittel mitverwendet.

27. Vorrichtung zur Durchführung eines Verfahrens nach einem oder mehreren der Ansprüche 1 bis 26, gekennzeichnet durch eine Düse zum Extrudieren eines homogenen, ein phasigen, flüssigen Gemisches von oben nach unten und eine eine Abkühlflüssigkeit enthaltende Abkühlvorrichtung in Form eines gleichschenkeligen U-Rohrs mit einer kanalförmigen, von einer Wand umgebenen Zone (3), welche von der Eintrittsstelle der Polymer-Mischungspartner-Mischung bis mindestens zum Punkt der beginnenden Erstarrung der Mischung reicht, einer Umlenkeinrichtung unterhalb des Punktes der beginnenden Erstarrung und einer Abzugsvorrichtung (6) für den gebildeten Formkörper und einer oder mehreren Öffnungen für den Zu- oder Ablauf der Abkühlflüssigkeit.

28. Vorrichtung nach Anspruch 27, gekennzeichnet durch einen Luftspalt zwischen Düse und dem Niveau der Abkühlfüssigkeit an der Eintrittsstelle des Polymer-Mischungs partner-Gemisches.

29. Vorrichtung nach Anspruch 27 oder 28, gekennzeichnet durch eine kastenförmige Ausführung der Abkühlvorrichtung mit Sichtscheibe.

30. Verwendung der nach einem oder mehreren der Ansprüche 23 bis 25 hergestellten PVDF-Formkörper für die Mikrofiltration von stark sauren oder stark alkalischen wäßrigen Lösungen.

**Revendications**

1. Procédé de fabrication de corps profilés munis de pores par extrusion dans un dispositif de refroidissement contenant un liquide réfrigérant d'un mélange liquide, homogène et à une seule phase composé d'un ou de plusieurs polymères et d'un ou de plusieurs ingrédients liquides à la température de formation du mélange, le mélange présentant au-dessus de la température ambiante à l'état liquide une zone d'entière miscibilité et une lacune de miscibilité et, au-dessus de la température ambiante, une zone de solidification, procédé dans lequel on refoule le mélange polymère/ingrédient à une température au-dessus de la lacune de miscibilité et à une vitesse linéaire moyenne $V_1$ à travers une filière de haut en bas dans un liquide réfrigérant qui, à la température de refroidissement, ne dissout pas le polymère ou que de façon négligeable et qui se trouve à une température en dessous du point de solidification, que l'on fait passer le mélange extrudé du point d'entrée dans le liquide réfrigérant au moins jusqu'au point du début de la solidification par une zone en forme de canal entourée par une paroi, qu'on dévie le corps profilé après le début de la solidification du polymère et on le fait passer de bas en haut dans une seconde zone, qu'on retire le corps profilé du liquide réfrigérant et on le lave jusqu'à ce que tous les constituants en dehors du ou des polymères soient complètement ou presque complètement éliminés et que pour finir on sèche le corps profilé, caractérisé par le fait que dans la zone en forme de canal, on règle la vitesse linéaire moyenne $V_2$ du liquide réfrigérant, mesurée dans le sens du déplacement du mélange polymère/ ingrédient, de manière qu'elle soit d'au moins 20% inférieure à $V_1$, que l'on maintient constant le niveau du liquide réfrigérant aussi bien au point d'entrée du mélange dans le liquide réfrigérant qu'au point de sortie du corps profile du liquide réfrigérant et que l'on maintient le liquide réfrigérant au même niveau en ces deux points.

2. Procédé selon la revendication 1, caractérisé par le fait que l'on fait passer le liquide réfrigérant à travers la zone en forme de canal à une vitesse linéaire moyenne $V_2$ qui est au moins de 25% inférieure à $V_1$.

3. Procédé selon la revendication 1 ou 2, caractérisé par le fait que le liquide réfrigérant se trouve dans un tube courbé en forme d'U.

4. Procédé selon l'une ou plusieurs des revendications 1 à 3, caractérisé par le fait que l'on ajoute continuellement en quantité dosée le liquide réfrigérant à proximité du point d'entrée du mélange dans le liquide réfrigérant du dispositif de refroidissement de manière qu'il traverse le dispositif dans le même sens que le déplacement du mélange et qu'il sorte du dispositif au niveau d'un dispositif de trop-plein au point de sortie du corps profilé.

5. Procédé selon l'une ou plusieurs des revendications 1 à 4, caractérisé par le fait que l'on dose le liquide réfrigérant tout autour du point d'entrée du mélange sous la forme d'un feuil cohérent.

6. Procédé selon l'une ou plusieurs des revendications précédentes, caractérisé par le fait que l'on maintient la vitesse linéaire moyenne $V_2$ du liquide réfrigérant égale à 0.

7. Procédé selon l'une ou plusieurs des revendications 1 à 6, caractérisé par le fait qu'on laisse subsister une fente d'aération entre la fillière et le point d'entrée du mélange polymère/ingrédient dans le liquide réfrigérant.

8. Procédé selon la revendication 7, caractérisé par le fait qu'on laisse subsister une fente d'aération de 2 à 20 mm de longueur.

9. Procédé selon la revendication 7 ou 8, caractérisé par le fait que la fente d'aération est climatisée.

10. Procédé selon l'une ou plusieurs des revendications 1 à 9, caractérisé par le fait que le liquide réfrigérant au point d'entrée du mélange dans le liquide réfrigérant a un poids spécifique jusqu'à 20% inférieur à celui du mélange en ce point.

11. Procédé selon l'une ou plusieurs des revendications 1 à 10, caractérisé par le fait que l'on utilise des mélanges polymère/ingréidient d'une viscosité de 2 à 25 Pa.s.

12. Procédé selon l'une ou plusieurs des revendications 1 à 11, caractérisé par le fait que l'on utilise des mélanges polymère/ingrédient avec 10 à 25% en poids de polymères.

13. Procédé selon l'une ou plusieurs des revendications 1 à 12, caractérisé par le fait que l'on façonne le mélange polymère/ingrédient en une membrane ayant la forme d'un fil creux, d'un flexible ou d'une feuille.

14. Procédé selon la revendication 13, caractérisé par le fait que dans le cas de la fabrication de fils creux ou de flexibles, on produit le lumen intérieur par introduction d'un liquide de remplissage interne qui ne constitue pas un solvant pour le ou les polymères à la température de production du lumen intérieur.

15. Procédé selon la revendication 14, caractérisé par le fait que le liquide de remplissage interne est de la glycérine ou un liquide que l'on a utilisé comme ingrédient lors de la formation du mélange.

16. Procédé selon la revendication 13, caractérisé par le fait que dans le cas de la fabrication de fils creux ou de flexibles on produit le lumen intérieur par introduction d'azote à l'état gazeux.

17. Procédé selon l'une ou plusieurs des revendications 1 à 16, caractérisé par le fait que la température de solidification du mélange se situe au-dessus d'environ 50°C.

18. Procédé selon l'une ou plusieurs des revendications 1 à 17, caractérisé par le fait que, comme liquide réfrigérant, on utilise de l'eau, éventuellement avec addition d'un tensio-actif.

19. Procédé selon l'une ou plusieurs des revendications 1 a 18, caractérisé par le fait que pour la formation du mélange, en plus d'au moins un solvant, on utilise encore au moins un ingrédient qui, à la température de formation du mélange et de son refoulement à travers la filière, n'est pas un solvant pour le ou les polymères.

20. Procédé selon l'une ou plusieurs des revendications 1 à 19, caractérisé par le fait que comme polymère, on utilise du polyamide 6.

21. Procédé selon l'une ou plusieurs des revendications 1 à 19, caractérisé par le fait que comme polymère, on utilise des copolyamides à base de Epsilon-caprolactame et de sel d'hexaméthylènediamine/ acide adipique.

22. Procédé selon la revendication 20 ou 21, caractérisé par le fait que comme ingrédient on utilise un mélange d'éthylène glycol et de glycérine.

23. Procédé selon l'une ou plusieurs des revendications 2 à 19, caractérisé par le fait que comme polymère on utilise un fluorure de polyvinylidène (PVDF).

24. Procédé selon la revendication 23, caractérisé par le fait que pour la formation du mélange, on utilise comme solvant pour le PVDF un ou plusieurs des composés de triacétate de glycérine, de diacétate de glycérine et de 2-(2-butoxyéthoxy-)acétate d'éthyle.

25. Procédé selon la revendication 23 ou 24, caractérisé par le fait que pour la formation du mélange polymère/ingrédient on utilise comme non solvant pour le PVDF du adipate de di-n-octyle ou de l'huile de ricin ou un mélange de ceux-ci.

26. Procédé selon l'une ou plusieurs des revendications 20 à 22, caractérisé par le fait qu'on utilise de 0,05 à 0,3% en poids d'un épaississant rapporté aux ingrédients.

27. Dispositif pour la mise en oeuvre d'un procédé selon l'une ou plusieurs des revendications 1 à 26, caractérisé par une filière pour l'extrusion de haut en bas d'un mélange liquide, homogène et à une seule phase et par un dispositif de refroidissement contenant un liquide réfrigérant et se présentant sous la forme d'un tube en U à branches égales comprenant une zone (3) en forme de canal, laquelle, entourée par une paroi, s'étend du point d'entrée du mélange polymère/ingrédient jusqu'à au moins le point du début de la solidification du mélange, un dispositif de renvoi en dessous du point du début de la solidification et un dispositif d'extraction (6) pour le corps profilé formé et une ou plusieurs ouvertures pour l'amenée ou l'évacuation du liquide réfrigérant.

28. Dispositif selon la revendication 27, caractérisé par une fente d'aération entre la filière et le niveau du liquide réfrigérant au point d'entrée du mélange polymère/ingrédient.

29. Dispositif selon la revendication 27 ou 28, caractérisé par un mode de réalisation en forme de caisson du dispositif de refroidissement avec voyant.

30. Utilisation des corps profilés PVDF fabriqué selon l'une ou plusieurs des revendications 23 à 25 pour la microfiltration de solutions aqueuses fortement acides ou fortement alcalines.

31. Utilisation des corps profilés PVDF fabriqués selon l'une ou plusieurs des revendications 23 à 25 pour la microfiltration de milieux oxydants.

32. Utilisation des corps profilés PVDF fabriqués selon l'une ou plusieurs des revendications 23 à 25 pour la microfiltration de solutions aqueuses d'hypochlorites.

33. Utilisation des corps profilés fabriqués selon l'une ou plusieurs des revendications 23 à 25 pour la distillation à travers une membrane.

## Claims

1. Process for the production of pore-containing shaped articles by extrusion of a homogeneous, single-phase liquid mixture of one or more polymers and one or more mix components which are liquid at the preparation temperature of the mixture, the mixture having a region of complete miscibility and a miscibility gap above room temperature in the liquid state and having a solidification range above room temperature, into a cooling apparatus containing cooling liquid, in which process the polymer/mix component mixture is conveyed at a temperature above the miscibility gap, with an average linear velocity $v_1$, through a die in the downward direction into a cooling liquid which at the cooling temperature does not dissolve the polymer or dissolves it only to an insignificant extent and which is at a temperature below the solidification point, and the extruded mixture is fed from the point of entry into the cooling liquid through a channel-shaped zone enclosed by a wall at least as far as the point of incipient solidification, the shaped article is deflected after incipient solidification of the polymer and fed in an upward direction through a second zone, the shaped article is withdrawn from the cooling liquid and rinsed until all components except for the polymer or polymers are completely or virtually completely removed and the shaped article is then dried, characterized in that the average linear velocity $v_2$ of the cooling liquid in the channel-shaped zone, measured in the direction of movement of the polymer/mix component mixture is kept at least 20% lower than $v_1$, that the level of the cooling liquid both at the point of entry of the mixture into the cooling liquid and at the point of exit of the shaped article from the cooling liquid is kept constant and the cooling liquid is maintained at the same level at both of these points.

2. Process according to Claim 1, characterized in that the cooling liquid is fed through the channel-shaped zone with an average linear velocity $v_2$, which is at least 25% lower than $v_1$.

3. Process according to Claim 1 or 2, characterized in that the cooling liquid is located in a tube bent into a u-shape.

4. Process according to one or more of Claims 1 to 3, characterized in that the cooling liquid is continuously metered in close to the point of entry of the mixture into the cooling liquid of the cooling apparatus, so that the said cooling liquid flows co-currently through the apparatus in the direction of movement of the mixture and leaves the apparatus at an overflow device at the point of exit of the shaped article.

5. Process according to one or more of Claims 1 to 4, characterized in that the cooling liquid is metered in the form of a coherent film around the point of entry of the mixture.

6. Process according to one or more of the preceding Claims, characterized in that the average linear velocity $v_2$ of the cooling liquid is held equal to 0.

7. Process according to one or more of Claims 1 to 6, characterized in that an air gap is maintained between die and the point of entry of the polymer/mix component mixture into the cooling liquid.

8. Process according to Claim 7, characterized in that an air gap 2 to 20 mm in length is maintained.

9. Process according to Claim 7 or 8, characterized in that the air gap is conditioned.

10. Process according to one or more of Claims 1 to 9, characterized in that at the point of entry of the mixture into the cooling liquid, the cooling liquid has a specific gravity up to 20% lower than that of the mixture at this point.

11. Process according to one or more of Claims 1 to 10, characterized in that the polymer/mix component mixtures with a viscosity of 2 to 25 Pa.s are used.

12. Process according to one or more of Claims 1 to 11, characterized in that polymer/mix component mixtures containing 10 to 25% by weight of polymer are used.

13. Process according to one or more of Claims 1 to 12, characterized in that the polymer/mix component mixture is shaped into a membrane in the form of a hollow filament, of a tube or of a film.

14. Process according to Claim 13, characterized in that in the case of the production of hollow filaments or tubes the internal lumen is produced by introducing a liquid which fills the interior and is not a solvent for the polymer or polymers at the temperature at which the internal lumen is produced.

15. Process according to Claim 14, characterized in that the liquid filling the interior is glycerol or a liquid which has been used as mix component in the preparation of the mixture.

16. Process according to Claim 13, characterized in that in the case of the production of hollow filaments or tubes, the internal lumen is produced by introducing gaseous nitrogen.

17. Process according to one or more of Claims 1 to 16, characterized in that the solidification temperature of the mixture is above about 50°C.

18

18. Process according to one or more of Claims 1 to 17, characterized in that water, optionally with an addition of sufactant, is used as cooling liquid.

19. Process according to one or more of Claims 1 to 18, characterized in that in the preparation of the mixture, in addition to at least one solvent, at least one mix component is also used, which is a non-solvent for the polymer or polymers at the preparation temperature of the mixture and the conveying temperature of the said mixture through the die.

20. Process according to one or more of Claims 1 to 19, characterized in that polyamide 6 is used as polymer.

21. Process according to one or more of Claims 1 to 19, characterized in that copolyamides based on epsilon-caprolactam and the salt of adipic acid with hexamethylenediamine are used as polymer.

22. Process according to Claim 20 or 21, characterized in that a mixture of ethylene glycol and glycerol is used as mix component.

23. Process according to one or more of Claims 2 to 19, characterized in that polyvinylidene fluoride (PVDF) is used as polymer.

24. Process according to Claim 23, characterized in that, in the preparation of the mixture, one or more of the compounds glycerol triacetate, glycerol diacetate and 2-(2-butoxyethoxy)ethyl acetate is/are used as solvent for PVDF.

25. Process according to Claim 23 or 24, characterized in that di-n-octyl adipate or castor oil or a mixture thereof is concomitantly used in the preparation of the polymer/mix component mixture as non-solvent for PVDF.

26. Process according to one or more of Claims 20 to 22, characterized in that 0.05 to 0.3% by weight of a thickening agent, relative to the mix component, is concomitantly used.

27. Apparatus for carrying out a process according to one or more of Claims 1 to 26, characterized by a die for extruding a homogeneous, single-phase, liquid mixture in a downward direction and by a cooling apparatus, containing a cooling liquid, in the form of a U-tube, with arms of equal length, having a channel-shaped zone (3) enclosed by a wall, which zone extends from the point of entry of the polymer/mix component mixture at least as far as the point of incipient solidification of the mixture, and having a deflection device below the point of incipient solidification and a take-off device (6) for the shaped article which has been formed and having one or more openings for the entry or exit of the cooling liquid.

28. Apparatus according to Claim 27, characterized by an air gap between die and the level of the cooling liquid at the point of entry of the polymer/mix component mixture.

29. Apparatus according to Claim 27 or 28, characterized by a box-shaped design of the cooling apparatus with sight window.

30. Use of the PVDF shaped articles produced according to one or more of Claims 23 to 25 for the microfiltration of strongly acidic or strongly alkaline aqueous solutions.

31. Use of the PVDF shaped articles produced according to one or more of Claims 23 to 25 for the microfiltration of oxidizing media.

32. Use of the PVDF shaped articles produced according to one or more of Claims 23 to 25 for the microfiltration of aqueous hypochlorite solutions.

33. Use of the PVDF shaped articles produced according to one or more of Claims 23 to 25 for trans-membrane distillation.

Abb. 1

Abb. 2